# EUROPÄISCHE PATENTSCHRIFT

(11) **EP 1 511 642 B1**
(45) Veröffentlichungstag und Bekanntmachung des Hinweises auf die Patenterteilung: **16.11.2011**
(21) Anmeldenummer: 03735399.2
(22) Anmeldetag: 16.05.2003
(51) Int. Cl.: B60G 17/00, B60G 3/14, B60G 7/02, B60G 11/16, B60G 11/30, F16F 9/096

(54) **FEDERUNGSEINRICHTUNG FÜR KRAFTFAHRZEUGE**
SUSPENSION DEVICE FOR MOTOR VEHICLES
DISPOSITIF DE SUSPENSION POUR VEHICULES AUTOMOBILES

(30) Priorität: 12.06.2002 DE 20209120 U
(43) Veröffentlichungstag der Anmeldung: 09.03.2005
(60) Teilanmeldung: 10171674.4
(73) Patentinhaber: HEMSCHEIDT FAHRWERKTECHNIK GmbH & Co. KG, 42781 Haan-Gruiten (DE)
(72) Erfinder: RUNKEL, Walter, 53547 Leubsdorf/Rhein (DE)
(74) Vertreter: Patentanwälte Dr. Solf & Zapf
(86) Internationale Anmeldenummer: PCT/EP2003/005142
(87) Internationale Veröffentlichungsnummer: WO 2003/106202

(56) Entgegenhaltungen:
- EP-A- 0 980 772
- US-A- 1 290 293
- US-A- 3 085 796
- US-A- 6 142 495

## Beschreibung

Die vorliegende Erfindung betrifft gemäß dem Oberbegriff des Patentanspruchs 1 eine Federungseinrichtung zur lasttragenden und federnden Abstützung eines Rades in einem Kraftfahrzeug, bestehend aus mindestens einem Federzylinder mit einem in einem Druckzylinder relativbeweglich geführten Kolben und aus einer Antriebseinrichtung zum Umsetzen von um eine (zu einer Radachse parallele) Schwingenachse oszillierenden Schwenkbewegungen eines Rad-Schwingentragarms in die Relativbewegungen zwischen Druckzylinder und Kolben, wobei der Kolben zur Erzeugung einer lasttragenden Tragfederkraft gegen ein elastisch kompressibles Federmedium wirkt, sowie mit einer Dämpfungseinrichtung zum Dämpfen der Federungsbewegungen.

Derartige Federungseinrichtungen werden vor allem bei schwereren Rad- und Gleisketten-Kraftfahrzeugen eingesetzt. Dabei ist jedem lasttragenden Fahrzeugrad zur eigenen, von den anderen Rädern unabhängigen Federung eine eigene Federungseinrichtung mit eigenem Federzylinder zugeordnet, der durch Zusammenwirken mit einem hydropneumatischen Federspeicher für das jeweilige Rad die Tragfederkraft erzeugt. Das Rad ist an einem freien Ende eines Rad-Schwingentragarms gelagert, wobei eine mit dem Tragarm verbundene Welle über eine Antriebseinrichtung gegen den Federzylinder bzw. gegen dessen Kolben wirkt.

Bei einer bekannten Federungseinrichtung der genannten Art ist die Antriebseinrichtung nach Art eines Pleuelantriebes ausgebildet, wobei mit der Welle ein Exzenterhebel verbunden ist, der seinerseits gelenkig mit einer an dem Kolben des Federzylinders angelenkten Pleuelstange verbunden ist. Ein solcher Pleuelantrieb hat hierbei den Nachteil, dass die Kraftübertragung nicht linear ist, sondern sich wegen der Schwenkbewegung des Exzenterhebels nach einer Sinusfunktion ändert. Es ergeben sich deshalb derart ungünstige Hebelverhältnisse, dass einerseits die Tragkraft nur durch relativ großen Druck erreichbar ist, und andererseits kann nur ein relativ kleiner Federweg (Federhub) erreicht werden, der vor allem für Geländefahrzeuge oftmals nicht ausreichend ist. Weiterhin ist bei der bekannten Federungseinrichtung eine Dämpfungseinrichtung zum Dämpfen der Federungsbewegungen integriert, indem das zur Erzeugung der Tragfederkraft gegen das kompressible (pneumatische) Medium wirkende Hydraulikmedium durch ein Dämpfungsventil strömt, dadurch aber nachteiligerweise durch Drosselwirkung rasch erwärmt wird. Diese Erwärmung wirkt sich auch auf das kompressible (pneumatische) Medium aus, indem dessen Druck und damit auch die Tragfederkraft ansteigen. Aus den genannten Gründen leidet die bekannte Federungseinrichtung unter ungünstigen, nicht konstanten Federungs- und Dämpfungseigenschaften.

Entsprechendes gilt auch für Federungssysteme, wie sie in jedem der Dokumente EP 0 980 772 A2 und US-A-3 085 796 beschrieben sind, weil auch dabei jeweils ein Federzylinder über ein Hydraulikmedium gegen ein Federmedium (Druckgas) wirkt. Indem das Hydraulikmedium über ein Dämpfungsventil gedrosselt wird, überträgt sich die entstehende Wärme in nachteiliger Weise auf das Federmedium.

Weiterhin sind auch nicht gattungsgemäße Federungseinrichtungen bekannt, wobei der Tragarm drehfest mit einer mechanischen, die Tragfederkraft erzeugenden Drehstabfeder verbunden ist. Solche Systeme erfordern sehr viel Einbauraum, da sich für jedes Rad eine gesonderte Drehstabfeder quer durch das gesamte Fahrzeug bis zur gegenüberliegenden Seite erstreckt und dort drehfest befestigt werden muß. Bei solchen mechanischen Federungseinrichtungen sind zudem auch mechanische Reibungsdämpfer vorgesehen.

Das Dokument US-A-1290 293 beschreibt auch eine rein mechanische Federung.

Der vorliegenden Erfindung liegt die Aufgabe zugrunde, eine Federungseinrichtung der eingangs beschriebenen, gattungsgemäßen Art zu schaffen, die sich bei kompakter Bauform durch hohe Leistung und verbesserte Federungseigenschaften und insbesondere verbesserte Dämpfungseigenschaften auszeichnet.

Erfindungsgemäß wird dies gemäß dem Anspruch dadurch erreicht, dass die Dämpfungseinrichtung zum Dämpfen der Federungsbewegungen einen separaten, von dem Federzylinder und dem Federmedium unabhängigen Kreislauf eines hydraulischen Dämpfungsmediums aufweist. Dazu weist die Dämpfungseinrichtung mindestens einen separaten Dämpferzylinder mit einem in einem Zylinder relativbeweglich geführten Dämpferkolben sowie mindestens ein hydraulisch mit dem Dämpferzylinder verbundenes Dämpfungsventil auf. Zweckmäßigerweise wirkt dabei die Dämpfungseinrichtung mit der gleichen Antriebseinrichtung zusammen wie auch der Federzylinder, allerdings sind vorteilhafterweise die Medien vollständig voneinander getrennt, so dass auch keine thermische Abhängigkeit besteht. Daher sind Erwärmungen des Dämpfungsmediums unkritisch, weil davon die Temperatur des Federmediums und somit auch die Tragfederkraft unbeeinflußt bleibt. Bevorzugt ist die Antriebseinrichtung des Federzylinders als Zahnradgetriebe ausgebildet. Dabei besteht das Zahnradgetriebe aus einem mit dem Schwingentragarm verbundenen oder verbindbaren, um die Schwingenachse rotierend gelagerten, zumindest eine Teil-Umfangsverzahnung aufweisenden Zahnradelement und einem mit dem Kolben (bei ortsfest angeordnetem Druckzylinder) oder mit dem Druckzylinder (bei ortsfest abgestütztem Kolben) verbundenen Zahnstangenelement. Vorteilhafterweise wird durch das erfindungsgemäße Zahnradgetriebe eine stets lineare Kraftübertragung erreicht, wobei problemlos auch große Federwege realisiert werden können. Die Dämpfungseinrichtung wird zweckmäßigerweise von dem gleichen Zahnradelement angetrieben, wozu ein separates Zahnstangenelement mit dem Dämpferkolben (bei ortsfester Abstützung des Zylinders) oder mit dem Zylinder (bei ortsfester Abstützung des Dämpferkolbens) verbunden sein kann. Die beiden Zahnstangenelemente des Federzylinders und des Dämpferzylinders können mit Vorteil im Wesentlichen parallel zueinander auf diametral gegenüberliegenden Seiten des Zahnradelementes angeordnet sein und mit diesem in Eingriff stehen. Daraus resultiert eine H-förmige Anordnung der Zahnrad und Zahnstangenelemente. Alternativ dazu kann aber auch nur ein gemeinsames Zahnstangenelement vorgesehen sein, wobei der Federzylinder auf der einen Seite und der Dämpferzylinder auf der anderen Seite angeordnet sind.

Weitere vorteilhafte Ausgestaltungen der Erfindung sind in den abhängigen Ansprüchen und der folgenden Beschreibung enthalten.

Anhand von mehreren, in der Zeichnung veranschaulichten Ausführungsbeispielen soll die Erfindung genauer erläutert werden. Dabei zeigen jeweils in schematischen Prinzipdarstellungen:
- Fig. 1: eine erste, einfachste Basisausführung einer nicht erfindungsgemäßen Federungseinrichtung,
- Fig. 2 und 3: Weiterbildungen der Ausführung nach Fig. 1,
- Fig. 4: eine Darstellung analog zu Fig. 1 zur Veranschaulichung von im Bereich der Antriebseinrichtung bzw. des Zahnradgetriebes auftretenden Kräften,
- Fig. 5 bis 15: weitere Ausführungsformen der Federungseinrichtung, wobei die Ausführungen ab Fig. 7 erfindungsgemäß sind,
- Fig. 16: eine vergrößerte Detail-Schnittansicht im Bereich einer bevorzugt vorgesehenen sogenannten Endlagendämpfung,
- Fig. 17 bis 22: weitere Ausführungsvarianten der erfindungsgemäßen Federungseinrichtung,
- Fig. 23: ein Kraft-/Weg-Diagramm zur Ausführung nach Fig. 22,
- Fig. 24 und 25: eine weitere Ausführung mit einem zugehörigen Diagramm analog zu Fig. 22 und 23,
- Fig.26: ein Druck- bzw. Kraft-/Weg-Diagramm zu bestimmten Ausführungen der Federungseinrichtung,
- Fig. 27: ein Diagramm analog zu Fig. 23 und 25 zu einer nicht dargestellten Ausführungsaltemative der Federungseinrichtung,
- Fig. 28 und 29: zwei Ausführungsvarianten mit "kinematischer Umkehr" im Bereich des/jedes Feder-/Dämpferzylinders,
- Fig. 30: eine Weiterbildung ausgehend von der Ausführung nach Fig. 24 mit zusätzlicher Nivelliereinrichtung und
- Fig.31: eine Weiterbildung der Ausführung gemäß Fig. 30 mit insbesondere lastabhängig verstellbarer Dämpfung.

In den verschiedenen Figuren der Zeichnung sind gleiche bzw. sich funktionell entsprechende Teile und Komponenten stets mit den gleichen Bezugszeichen versehen. Insofern gilt jede Beschreibung eines Teil, die auf eine oder mehrere bestimmte Zeichnungsfiguren Bezug nimmt, analog auch bezüglich der anderen Zeichnungsfiguren, in denen das Teil mit dem entsprechenden Bezugszeichen ebenfalls zu erkennen ist.

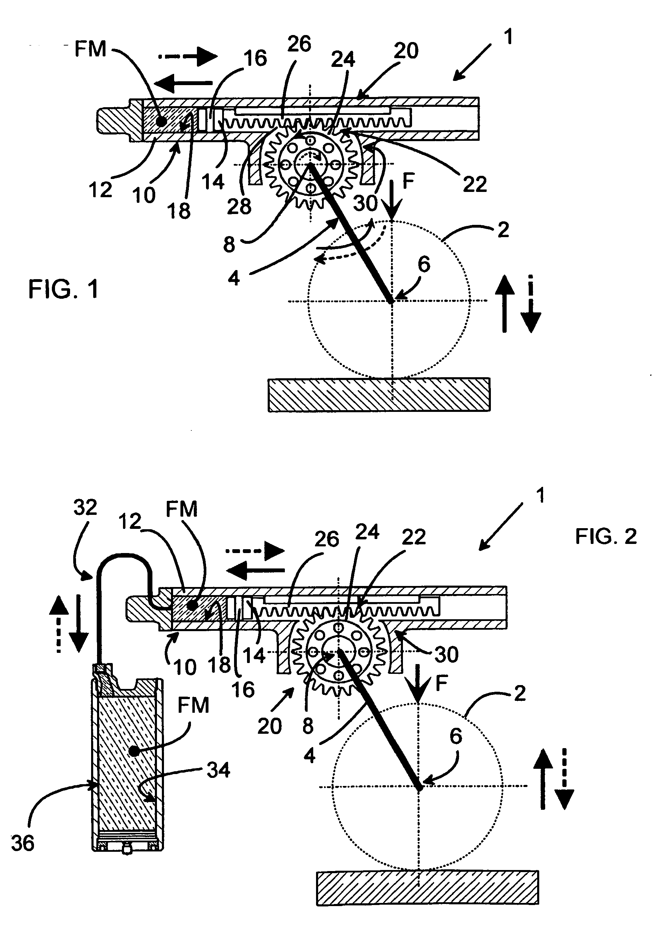

Wie sich zunächst aus Fig. 1 ergibt, dient eine Federungseinrichtung 1 zur "Einzelrad-Aufhängung", d. h. zur lasttragenden und federnden Abstützung eines nur schematisch angedeuteten Rades 2 in einem Kraftfahrzeug. Das Rad 2 ist dazu an einem Ende eines Schwingentragarms 4 um eine Radachse 6 drehbar gelagert, wobei der Schwingentragarm 4 um eine zur Radachse 6 parallele Schwingenachse 8 verschwenkbar ist, so dass er durch etwa vertikale Rad-Federungsbewegungen oszillierend hin und her um die Schwingenachse 8 verschwenkt wird. Dazu sei erwähnt, dass in den Zeichnungsfiguren die Bewegungen und Strömungsrichtungen beim Einfedern des Rades 2 jeweils durch vollgezeichnete Pfeile und beim Ausfedern durch gestrichelte Pfeile veranschaulicht sind.

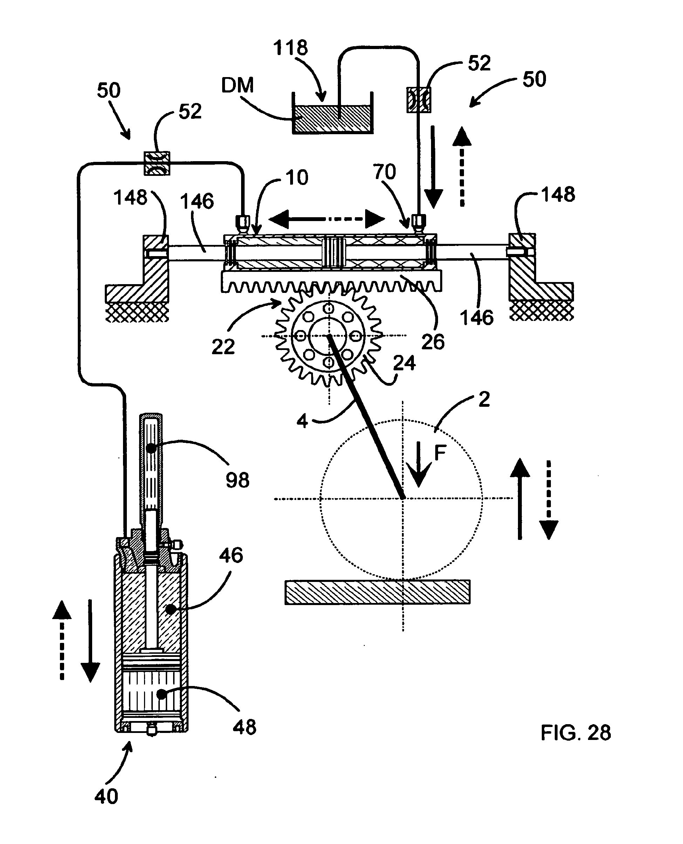

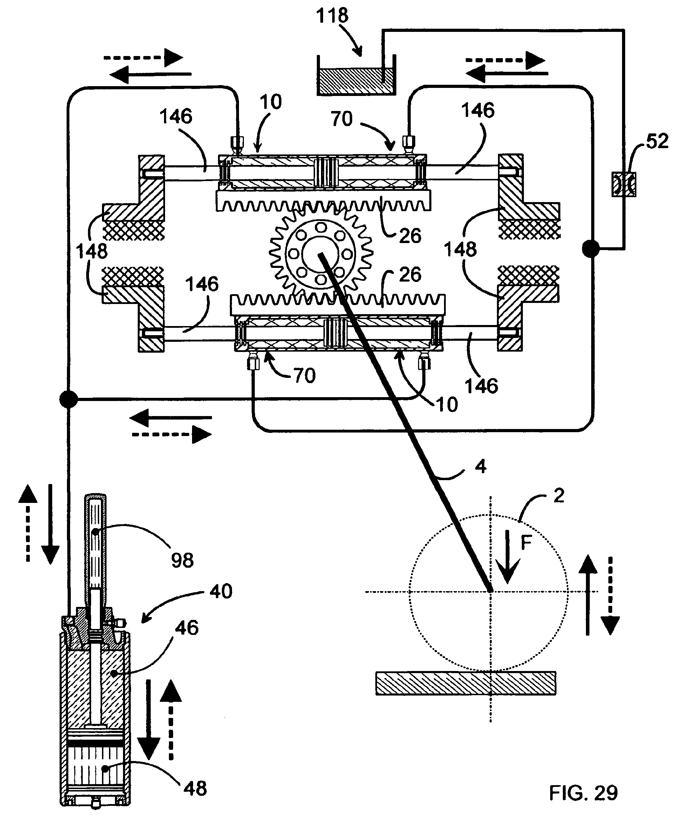

Die Federungseinrichtung 1 besteht in der einfachsten Basisversion gemäß Fig. 1 aus einem Federzylinder 10, der seinerseits aus einem Druckzylinder 12 und einem darin relativbeweglich geführten Kolben 14 besteht. Es sei schon jetzt bemerkt, dass bezüglich dieser Relativbewegung beide Altemativen möglich sind; so kann - vergleiche u. a. Fig. 1 - der Druckzylinder 12 ortsfest im Fahrzeug gehaltert und der Kolben 14 beweglich sein, oder- vergleiche Fig. 28 und 29 - bei ortsfest abgestütztem Kolben 14 kann der Druckzylinder 12 bewegbar sein. Der Kolben 14 ist über eine Umfangsdichtung 16 gegen die Innenwandung des Druckzylinders 12 abgedichtet, so dass er eine verschiebbare Begrenzungswand eines Zylinder-Druckraums 18 bildet. Bei dieser Ausführung ist der Druckraum 18 mit einem elastisch kompressiblen Federmedium FM gefüllt, so dass der Kolben 14 unmittelbar gegen das Federmedium FM wirkt. Weiterhin weist die Federungseinrichtung 1 eine Antriebseinrichtung 20 derart auf, dass die oszillierenden Federungs-Schwenkbewegungen des das Rad 2 tragenden Schwingentragarms 4 in die linearen Relativbewegungen zwischen Druckzylinder 12 und Kolben 14 umgesetzt werden. Der Kolben 14 wirkt dabei so gegen das Federmedium FM, dass durch dessen elastische Komprimierung eine die jeweilige Radlast tragende bzw. dieser entsprechende Tragfederkraft F erzeugt wird.

In bevorzugter Ausgestaltung ist die Antriebseinrichtung 20 als Zahnradgetriebe 22 ausgebildet. Dieses Zahnradgetriebe 22 besteht aus einem um die Schwingenachse 8 rotierend gelagerten Zahnradelement 24 und einem Zahnstangenelement 26, welches bei den ersten Ausführungsformen ab Fig. 1 mit dem Kolben 14 verbunden ist, während der Druckzylinder 12 ortsfest im Fahrzeug befestigt wird. Das Zahnradelement 24 ist mit dem Schwingentragarm 4 verbunden oder verbindbar, so dass durch die Federungsbewegungen des Rades 2 und die oszillierenden Schwenkbewegungen des Schwingentragarms 4 das Zahnradelement 24 entsprechend oszillierend hin- und hergedreht wird. Dadurch wird über das Zahnstangenelement 26 der Kolben 14 entsprechend linear hin- und herbewegt. Entsprechend dem dabei notwendigen Drehbewegungsbereich des Zahnradelementes 24 würde es grundsätzlich ausreichen, wenn dieses nur über einen entsprechenden Teilbereich seines Umfanges eine Umfangsverzahnung aufweisen würde. In den dargestellten, bevorzugten Ausführungen ist aber jeweils ein vollständig verzahntes Zahnradelement 24 vorgesehen.

Die von dem Rad 2 beim Einfedern über den Schwingentragarm 4 auf das Zahnradelement 24 übertragenen Kräfte führen dazu, dass das Zahnradelement 24 sich dreht und hierdurch der Kolben 14 über das Zahnstangenelement 26 in Richtung des Druckraums 18 verschoben wird. Durch Zusammendrücken des kompressiblen Federmediums FM im Druckraum 18 wirkt der Kolbenverschiebung eine ansteigende Kraft entgegen. Die jeweilige Bewegung endet, wenn sich zwischen der Kraft, die auf das Rad 2 wirkt, und der Kompressionskraft des Federmediums FM im Druckraum 18 ein Gleichgewicht einstellt. Werden die Kräfte am Rad 2 kleiner als die Kompressionskraft des Federmediums FM, so dehnt sich das Federmedium im Druckraum 18 aus und verschiebt den Kolben 14, so dass über das Zahnradgetriebe 22 der Schwingentragarm 4 mit dem Rad 2 eine entsprechende Schwenkbewegung in Ausfederungsrichtung ausführt.

Bei der Ausführung nach Fig. 1 ist ausschließlich der Zylinder- Druckraum 18 insbesondere vollständig mit dem kompressiblen Federmedium FM gefüllt. Bei diesem Federmedium FM handelt es sich in diesem Fall um eine kompressible Flüssigkeit mit einer Kompressibilität von mindestens 10 %. Mit Vorteil kann beispielsweise Silikon eingesetzt werden, welches eine Kompressiblität von etwa 18 % aufweisen kann.

Der Druckzylinder 12 ist auf seiner von dem Druckraum 18 wegweisenden Seite rohrartig verlängert. Dieser Bereich dient zur mechanischen Führung des Zahnstangenelementes 26. Das Zahnradelement 24 greift hierbei durch eine Öffnung 28 hindurch in den Bereich des Zahnstangenelementes 26 ein. Vorzugsweise wird die gesamte Anordnung von Federzylinder 10 und Zahnradgetriebe 22 durch ein gemeinsames Trägerelement 30 zusammengefaßt und ist dadurch über das Trägerelement 30 am Fahrzeug befestigbar. Dabei kann mit Vorteil das Trägerelement 30 auch die Lagermittel für das Zahnradgetriebe 22 bzw. das Zahnradelement 24 aufweisen. Das Rad 2 wird somit über den Schwingentragarm 4 an der fahrzeugseitig gehalterten Federungseinrichtung 1 aufgehängt.

Was nun die Ausführung gemäß Fig. 2 betrifft, so entspricht diese zunächst im Wesentlichen der Ausführung nach Fig. 1. Unterschiedlich ist hier nur, dass der Druckraum 18 über eine Leitung 32 mit einem Zusatzraum 34 verbunden ist, der ebenfalls bevorzugt vollständig mit dem kompressiblen Federmedium FM gefüllt ist. Wie dargestellt kann der Zusatzraum 34 durch einen separaten Speicherbehälter 36 gebildet sein. Bei einem Einfedern des Rades 2 wird hier nicht nur das Federmedium FM im Druckraum 18 komprimiert, sondern auch das zusätzliche Federmedium im Zusatzraum 34. Entsprechendes gilt auch für ein Entspannen des Federmediums im Falle eines Ausfederns des Rades 2. Bei dieser Ausführung wird somit eine Vergrößerung des verfügbaren Volumens des Federmediums FM erreicht (größeres Kompressionsvolumen). Hierdurch kann die Federcharakteristik verändert werden und/oder es kann der maximalen Hub des Federweges (auch Hub des Zahnstangenelementes 26) vergrößert werden. Dies sei an einem einfachen Beispiel erläutert. Hat zum Beispiel das eingesetzte Federmedium eine Kompressibilität von 18 %, so bedeutet dies, dass z.B. 100 cm³ auf 82 cm³ zusammengedrückt werden können, wobei ein bestimmter Kraftanstieg für dieses Zusammendrücken erforderlich ist. Über das Volumen kann folglich das Verhältnis der Kompression festgelegt werden, oder es kann bei gleichem Kompressionsverhältnis der Hub (Federweg) vergrößert oder verkleinert werden.

Der Vorteil der Ausführungen nach Fig. 1 und 2 ist, dass nur ein Medium FM verwendet wird. Weiterhin ist im Vergleich zu einem Gas eine einfache Abdichtung möglich. Außerdem ist gegenüber einem Gas ein wesentlicher Vorteil der kompressiblen Flüssigkeit, dass eine Volumenveränderung im Falle einer Temperaturänderung um ein Mehrfaches geringer als bei Gas ist. Hierdurch entfällt vorteilhafterweise ein zusätzlicher Aufwand für eine Kompensierung von temperaturbedingten Volumenänderungen. Die Ausführungen nach Fig. 1 und 2 ermöglichen jedoch nur eine relativ geringe Veränderung der Kompressionsverhältnise innerhalb der bestehenden Federungseinrichtung 1. Außerdem muß das gesamte Arbeitsvolumen relativ groß sein, weil die Kompressibilität relativ gering ist.

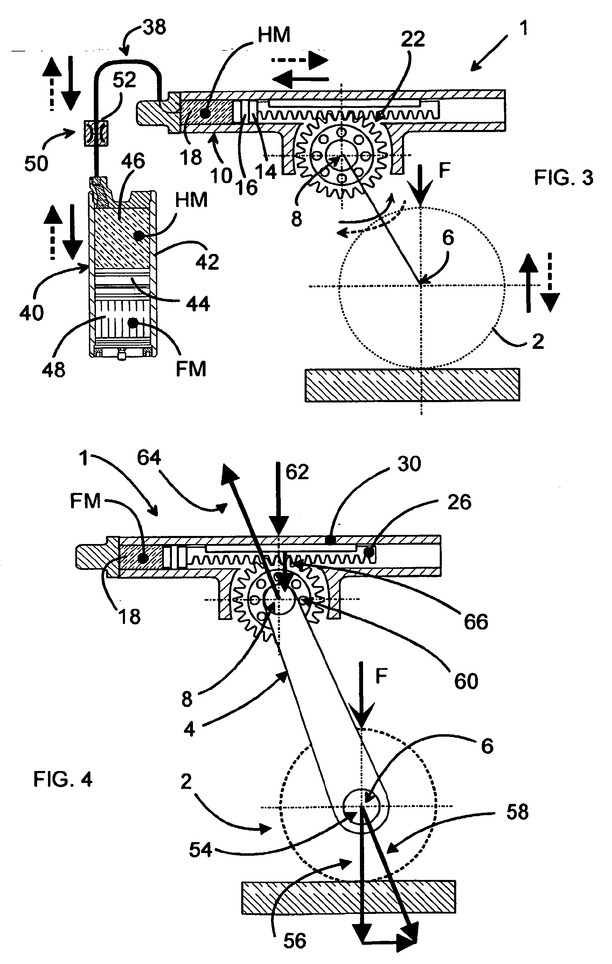

Deshalb ist bei den Ausführungen ab Fig. 3 vorgesehen, dass der Kolben 14 mittelbar über ein hydraulisches und somit praktisch nicht oder nur unwesentlich kompressibles Medium HM gegen ein kompressibles pneumatisches Federmedium FM wirkt. Bei dieser Ausführung ist dazu beispielhaft vorgesehen, dass der Druckraum 18 des Federzylinders 10 über eine Leitung 38 mit einem hydropneumatischen Federspeicher 40 verbunden ist. Dieser Federspeicher besteht vorzugsweise aus einem Speicherzylinder 42 und einem darin schwimmend, frei beweglich geführten Trennkolben 44, der einen Speicherraum 46 von einer Federkammer 48 abteilt. Hierbei sind der Druckraum 18 des Federzylinders 10 und der Speicherraum 46 des Federspeichers 40 mit dem hydraulischen Medium HM gefüllt. In der Federkammer 48 ist ein geeignetes Gas unter Kompressionsvorspannung angeordnet. Gas als Federmedium FM hat den Vorteil, dass es sehr stark komprimiert werden kann. Da eine starke Komprimierung erzielt werden soll, ist es Voraussetzung, dass das Gas nicht entzündlich ist. Diese Voraussetzung erfüllen sogenannte Edelgase, wie Stickstoff, Argon, Helium, Crypton oder Neon.

Der Vorteil der Ausführung gemäß Fig. 3 ist, dass hierbei eine sehr einfache Anpassung der Kompressionskraft bzw. Federcharakteristik realisiert werden kann. Dies kann durch Einstellung des Druckes des Gasvolumens beim Befüllen der Federkammer 48 erfolgen. Ein weiterer Vorteil ist, dass das Kompressionsvolumen wesentlich keiner sein kann als bei der kompressiblen Flüssigkeit gemäß Fig. 1 und 2. Hierdurch kann ein sehr geringes Bauvolumen der Vorrichtung insgesamt erreicht werden.

In weiterer Ausgestaltung ist bei der Ausführung nach Fig. 3 eine Dämpfungseinrichtung 50 zum Dämpfen der Federungsbewegungen, und zwar hauptsächlich der Ausfederungsbewegungen, vorgesehen. Dazu ist in der Leitungsverbindung 38 zwischen Federzylinder 10 und Federspeicher 40 ein Dämpfungsventil 52 angeordnet. Die Dämpfung erfolgt hierbei durch Drosselung des strömenden Hydraulikmediums HM.

In Fig. 4 sind für die Ausführungen nach Fig. 1 bis 3 die jeweils wirkenden Kräfte eingezeichnet. Im Bereich eines Drehlagers 54 des Rades 2 wirkt bedingt durch die Gewichtskraft 56 und die jeweilige Schrägstellung des Schwingentragarms 4 zur Vertikalen eine Lagerbelastung 58. Dementsprechend wird ein Drehlager 60 des mit dem Schwingentragarm 4 verbundenen Zahnradelementes 24 durch die Gewichtskraft 62 mit der Kraft 64 belastet. Dabei wirkt im Bereich der in Eingriff stehenden Verzahnungen des Zahnradgetriebes 22 eine Zahnkraft 66 in Richtung des Drehlagers 60. Aus diesem Grund ist es günstig, das Zahnstangenelement 26 auf der dem Rad 2 und dem Schwingentragarm 4 gegenüberliegenden (vertikal oberen) Seite des Zahnradelementes 24 anzuordnen.

Bei den Ausführungen gemäß Fig. 1 bis 4 wirken somit durch den einseitigen Zahneingriff des Zahnradelementes 24 jeweils Zahnkräfte auf das Drehlager 60. Diese Zahnkräfte können relativ hoch sein, da die gesamte Kraft über das (nur eine) Zahnstangenelement 26 wirkt.

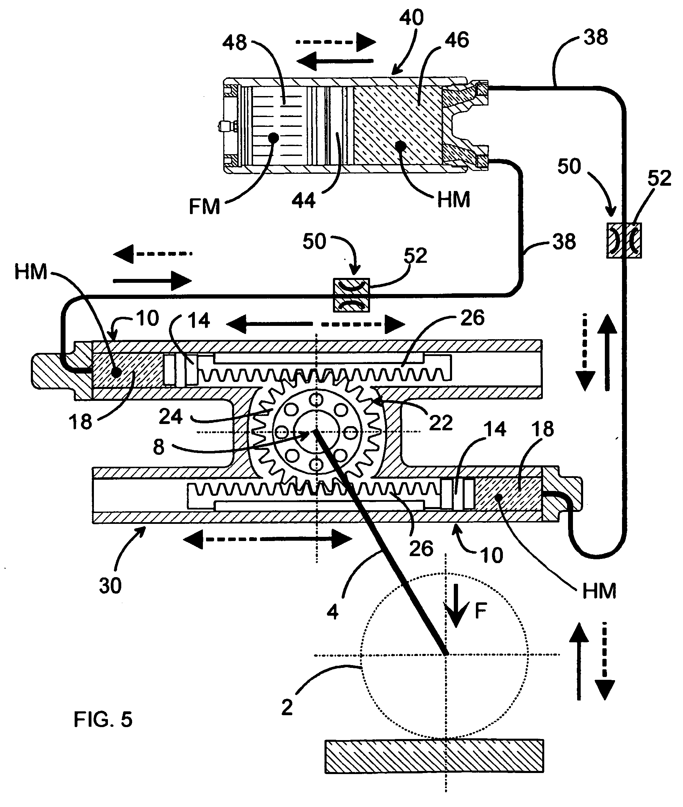

In einer vorteilhaften Ausgestaltung gemäß Fig. 5 ist daher vorgesehen, dass das Zahnradgetriebe 22 über das gleiche Zahnradelement 24 gegen einen zusätzlichen, gleichwirkenden Federzylinder 10 wirkt. Bevorzugt handelt es sich um eine zur Schwingenachse 8 punkt- bzw. achsensymmetrische Anordnung, wobei zwei den beiden Federzylindern 10 zugeordnete Zahnstangenelemente 26 auf diametral gegenüberliegenden Seiten des Zahnradelementes 24 mit diesem in Eingriff stehen. Dadurch ergibt sich eine H-förmige Anordnung. Bei dieser Ausführung nach Fig. 5 sind die beiden Druckräume 18 der Federzylinder 10 über Leitungen 38 mit dem gleichen hydropneumatischen Federspeicher 40 verbunden. In jede Leitung 38 kann - wie dargestellt - ein Dämpfungsventil 52 geschaltet sein. Der wesentliche Vorteil dieser Ausführung nach Fig. 5 ist, dass die Kräfte im Bereich der jeweiligen Verzahnung halbiert werden und zusätzlich die Lagerung des Zahnradelementes 24 entlastet wird. Insgesamt ergibt sich somit eine günstigere (symmetrische) Kräfteverteilung.

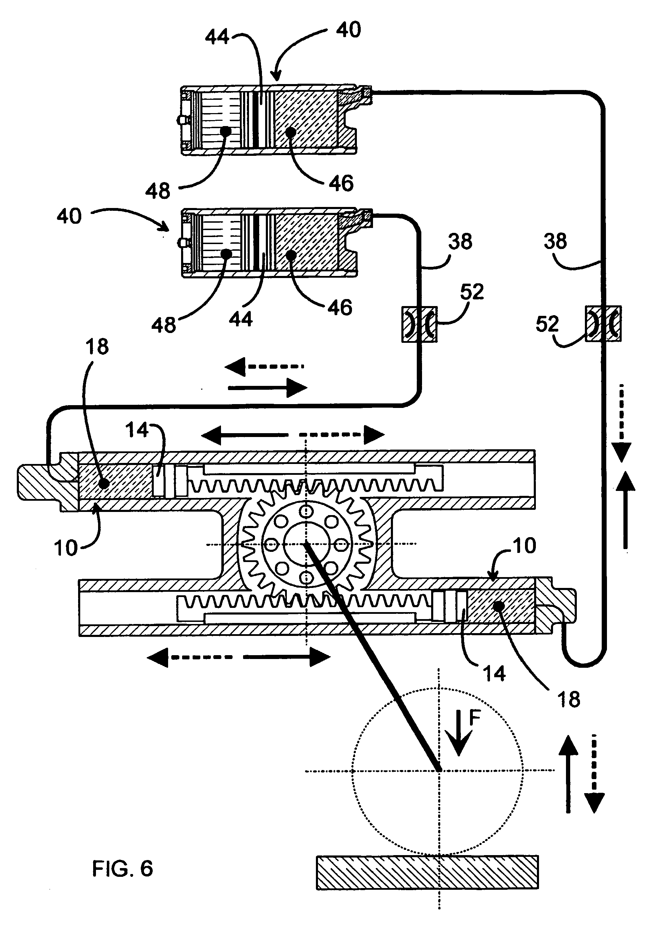

Die Ausführung gemäß Fig. 6 entspricht weitgehend derjenigen gemäß Fig. 5. Unterschiedlich ist hier nur, dass jeder Druckraum 18 der beiden gleichwirkenden Federzylinder 10 auf einen von zwei separaten Federspeichern 40 geschaltet ist. Hierdurch kann die Kraft bzw. der Kraftverlauf durch eine unterschiedliche Kompressionseinstellung des Federmediums innerhalb der beiden Federkammern 48 über den Hub bzw. Weg der Zahnstangenelemente 26 veränderlich eingestellt werden. Dadurch ist es möglich, einen bestimmten Kraftverlauf zu realisieren, da sich die Kräfte der beiden Zahnstangenelemente am Zahnradelement addieren. Man kann folglich über den Hub bzw. Weg der Zahnstangenelemente und somit über den Drehwinkel des Zahnradelementes 24 andere Kraftverläufe realisieren, als dies bei der Kompression nur eines Federmediums bzw. Gasvolumens möglich ist. Diese vorteilhafte Ausgestaltung kann dazu genutzt werden, um beispielsweise gegen Ende des Federweges einen hohen Kraftanstieg zu erreichen. Hierdurch wird das Rad 2 bei der Einfederung stark abgebremst und der mechanische Anschlag ist nicht so hart. Auch bei dieser Ausführung gemäß Fig. 6 kann in wenigstens einer oder in beiden Leitungen 38 ein Dämpfungsventil 52 angeordnet sein.

Bei den bisher beschriebenen, nicht der Erfindung gemäß Anspruch 1 entsprechenden Ausführungsformen mit Dämpfungseinrichtung 50 wird jeweils das hydraulische Medium HM im Federungskreislauf gedämpft. Durch die Dämpfung bzw. Drosselung wird das hydraulische Medium HM jeweils erwärmt. Diese Wärme überträgt sich auch auf das Federmedium FM, woraus eine temperaturbedingte Druckänderung resultiert.

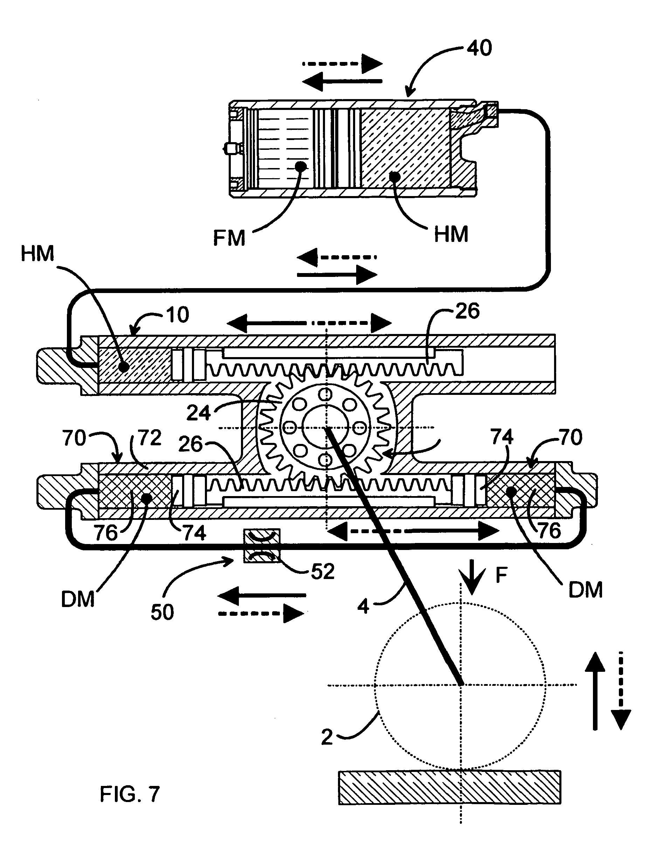

Deshalb ist bei den ab Fig. 7 dargestellten Ausführungen erfindungsgemäß vorgesehen, dass die Dämpfungseinrichtung 50 einen separaten, von dem Federzylinder 10 und dem Federmedium FM unabhängigen Kreislauf eines hydraulischen Dämpfungsmediums DM aufweist. Hierdurch wird voreilhafterweise eine thermische Entkoppelung des Dämpfungskreislaufs vom Federungskreislauf erreicht. Dazu weist die Dämpfungseinrichtung 50 mindestens einen Dämpferzylinder 70 mit einem in einem Zylinder 72 relativbeweglich geführten Dämpferkolben 74 sowie mindestens ein hydraulisch mit dem Dämpferzylinder 70 verbundenes Dämpfungsventil 52 auf. Bei der Ausführung gemäß Fig. 7 sind allerdings zwei gegenläufige Dämpferzylinder 70 vorgesehen. Die beiden Dämpferkolben 74 der beiden Dämpferzylinder 70 sind mit den Enden eines gemeinsamen Zahnstangenelementes 26 verbunden und werden von dem gleichen Zahnradelement 24 angetrieben wie auch das Zahnstangenelement 26 des Federzylinders 10. Die beiden Zahnstangenelemente 26 sind - ähnlich zu Fig. 5 und 6 - auf diametral gegenüberliegenden Seiten des Zahnradelementes 24 angeordnet. Jeder Dämpferkolben 74 wirkt gegen das im Zylinderraum 76 angeordnete Dämpfungsmedium DM. Durch die beschriebene Anordnung sind die beiden Zylinderräume 76 im genau gleichen Umfang gegensinnig volumenveränderlich. Dadurch wird das Dämpfungsmedium DM bei den Federungsbewegungen jeweils aus dem einen Zylinderraum 76 verdrängt und von dem anderen Zylinderraum 76 aufgenommen. Bei dieser Strömung wird das Dämpfungsmedium DM in dem Dämpfungsventil 52 gedämpft.

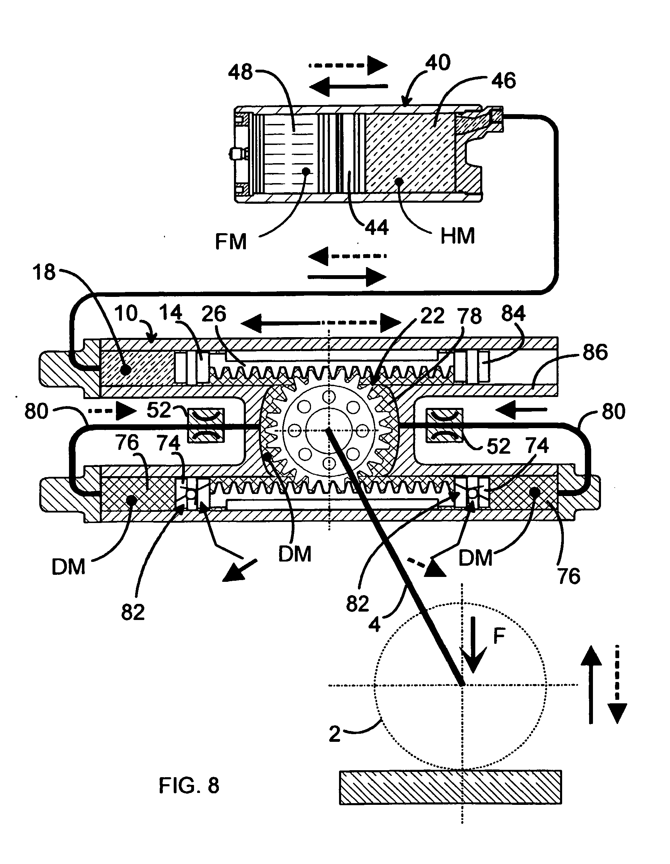

In Fig. 8 ist eine Variante zu Fig. 7 veranschaulicht, wobei ein das Zahnradgetriebe 22 aufnehmender Gehäuseraum 78 in den Dämpfungskreislauf einbezogen ist. Dazu ist der Gehäuseraum 78 mit dem Dämpfungsmedium DM gefüllt und über jeweils eine Leitung 80 mit den beiden Zylinderräumen 76 verbunden. In den Leitungen 80 ist jeweils ein Dämpfungsventil 52 angeordnet. Außerdem weist dabei vorzugsweise jeder Dämpferkolben 74 eine Strömungspassage mit einem Rückschlagventil (Nachsaugventil) 82 auf. Bei dieser Ausführung strömt das Dämpfungsmedium nicht direkt von einem Zylinderraum 76 in den anderen Zylinderraum 76, sondern das jeweils verdrängte Dämpfungsmedium DM wird über das jeweilige Dämpfungsventil 52 in den Gehäuseraum 78 verdrängt, und der jeweils größer werdende Zylinderraum 76 füllt sich über das Nachsaugventil 82 mit dem Dämpfungsmedium DM aus dem das Zahnradgetriebe 22 aufnehmenden Gehäuseraum 78. Der wesentliche Vorteil diese Ausführung ist, dass das Zahnradgetriebe 22 und die Lagerstellen des Zahnradelementes 24 in einem Ölbad angeordnet sind und somit eine Dauerschmierung gewährleistet ist. Ergänzend sei dazu noch erwähnt, dass zur Abdichtung des Gehäuseraums 78 das mit dem Kolben 14 des Federzylinders 10 verbundene Zahnstangenelement 26 auch auf seiner gegenüberliegenden Seite mit einem weiteren Kolben 84 verbunden ist, wobei dieser Kolben 84 in einem Zylinderabschnitt 86 abgedichtet geführt ist. Die dem Zahnstangenelement 26 gegenüberliegende Seite des Zylinderabschnittes 86 ist offen ausgebildet bzw. mit der Atmosphäre verbunden.

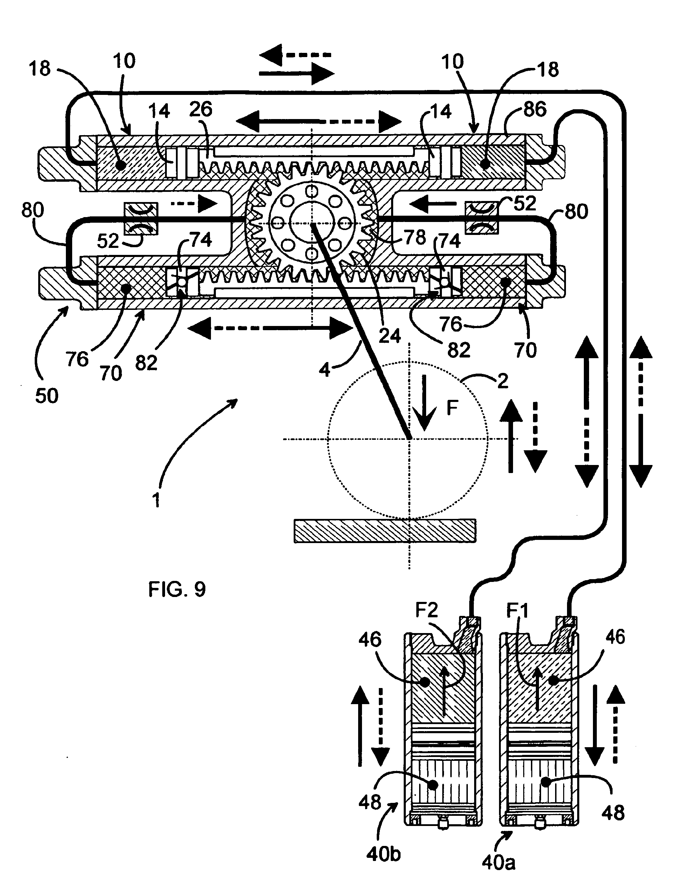

Die Ausführungsform gemäß Fig. 9 entspricht bezüglich der Dämpfungseinrichtung 50 der Ausführung nach Fig. 8. Demgegenüber ist hier unterschiedlich, dass der Bereich des Zylinderabschnittes als zusätzlicher Federzylinder 10 ausgebildet ist. Die somit vorhandenen zwei Federzylinder 10 wirken gegenläufig, indem die Kolben 14 über das gleiche Zahnstangenelement 26 verbunden sind. Die somit gegenläufig volumenveränderbaren Druckräume 18 sind mit jeweils einem von zwei separaten Federspeichern 40 verbunden. Dadurch wirken folglich die Drücke der beiden Federspeicher 4 gegeneinander, so dass an dem Zahnstangenelement 26 eine Differenzkraft entsteht, und nur diese Differenzkraft wirkt über das Zahnradelement 24 als eigentliche Federkraft F der Federungseinrichtung 1.

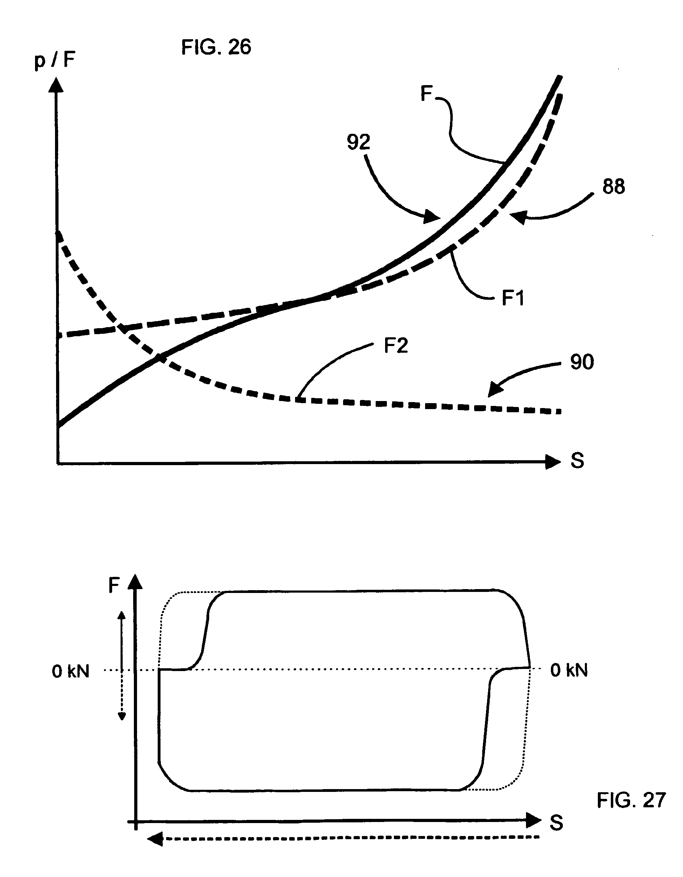

Dazu wird auf das in Fig. 26 dargestellte Diagramm hingewiesen. Darin ist über den Federweg s der Druck p bzw. die daraus resultierende Kraft F dargestellt. Eine erste gestrichelte Kennlinie 88 veranschaulicht den Kraftverlauf des in Fig. 9 rechts dargestellten Federspeichers 40, dessen Druck bzw. Kraft in Einfederungsrichtung ansteigt. Eine zweite gestrichelte Kennlinie 90 veranschaulicht den Verlauf des Druckes bzw. der Kraft des in Fig. 9 links dargestellten Federspeichers 40. Eine volldurchgezeichnete Kennlinie 92 veranschaulicht die aus der Addition der beiden Teil-Kennlinien resultierende Gesamtkennlinie. Die Wirkungsweise ist wie folgt:

Wenn sich bei einer Drehung des Zahnradelementes 24 das (obere) Zahnstangenelement 26 verschiebt, erhöht sich in dem einen Speicher der Druck und in dem jeweils anderen fällt der Druck ab, da aus dem einen Druckraum 18 das Hydraulikmedium in den einen Federspeicher geschoben wird und in den gegenüberliegenden Druckraum 18 das Hydraulikmedium aus dem anderen Federspeicher hineinfließt. Das Federmedium in dem einen Federspeicher wird komprimiert, der Druck steigt an, und das Federmedium im anderen Federspeicher entspannt sich, der Druck fällt ab. Voraussetzung für die gewünschte Wirkungsweise ist, dass der Druck in dem einen Federspeicher in der statischen Position sich von dem Druck des anderen Federspeichers unterscheidet. Auch dies ist in Fig. 26 veranschaulicht. Weiterhin zeigt das Diagramm, dass die eine Kraft abfällt, wenn die andere Kraft ansteigt und umgekehrt. Der Vorteil dieser Ausführungsform ist, dass der Temperatureinfluß der Volumenveränderung des Federmediums reduziert wird. Im Falle einer Erwärmung dehnen sich beide Volumina in den Federkammern 48 aus. Da die Ausdehnung des einen Volumens dazu führt, dass Hydraulikmedium in den zugehörigen Druckraum 18 geschoben wird und hierdurch sich das Zahnstangenelement 26 in Richtung des anderen Druckraums 18 verschiebt, wird Hydraulikmedium aus letzerem in den zugehörigen Federspeicher 40 geschoben. Da sich aber auch in diesem Federspeicher das Federmedium ausdehnt, wird nicht nur der Druck durch das hineinfließende Hydraulikmedium erhöht, sondern auch durch die temperaturbedingte Ausdehnung in diesem Federspeicher. Diese doppelte Druckerhöhung führt dazu, dass nur eine relativ kleinere Verschiebung des Zahnstangenelementes 26 durch den Federspeicher mit höheren Druck gegen den Federspeicher mit dem geringeren Druck erfolgt. Das Zahnstangenelement macht also wesentlich weniger Verschiebeweg als ohne die bevorzugt vorgesehene Druck-Gegensteuerung. Dies bedeutet, dass sich das Zahnradelement 24 ebenfalls nicht nennenswert dreht, was wiederum eine geringe Schwenkbewegung des Schwingentragarms 4 mit dem Rad 2 bedeutet. Die Positionsverlagerung des Rades 2 am Schwingentragarm 4 ist gering, so dass vorteilhafterweise auch keine Zusatzmaßnahme zur Niveauregulierung erforderlich ist, wozu beispielsweise Hydraulikmedium in das System abgeführt oder aus diesem abgelassen werden könnte.

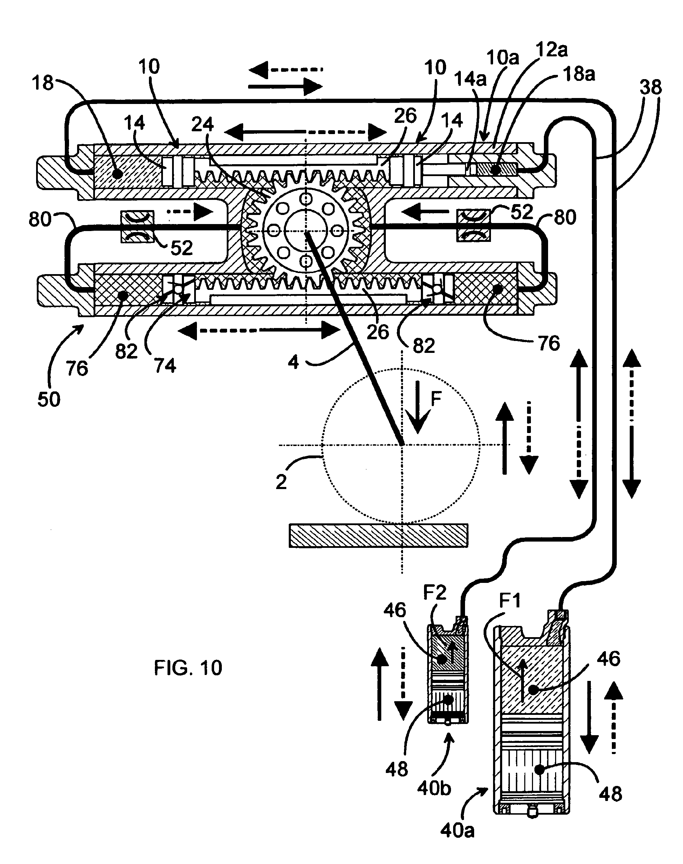

In Fig. 10 ist eine konstruktive Variante zur Ausführung nach Fig. 9 dargestellt. Diese Ausführung hat grundsätzlich die gleiche Wirkungsweise wie die Ausführung nach Fig. 9 was den Ausgleich des Temperatureinflusses betrifft. Unterschiedlich ist hier nur, dass der erste Druckraum 18, der sich bei einer Einfederung des Rades 2 verkleinert, ein größeres Volumen und einen größeren Querschnitt aufweist, als der zweite, gegengesetzt wirkende Druckraum 18a. Konstruktiv wird dies dadurch erreicht, dass der Druckzylinder 12a dieses gegenläufig wirkenden Federzylinders 10a einen reduzierten Innenquerschnitt aufweist. Der Kolben 14 ist dabei mit einem entsprechenden kleineren Zusatzkolben 14a verbunden. Der größere Druckraum 18 ist mit einem größeren Federspeicher 40a verbunden, während der kleinere Druckraum 18a mit einem kleineren Federspeicher 40b verbunden ist. Die Gegensteuerung zum Ausgleich der Temperaturausdehnung des Federmediums in dem Federspeicher 40a wird somit durch ein relativ kleineres verdrängtes Volumen erreicht. Der Federspeicher 40b mit geringem Federmedium-Volumen, in den das geringe Hydraulikvolumen gedrückt wird, ist so dimensioniert, dass eine kleine Hydraulikmenge zu einem hohen Druckanstieg führt. Dieser hohe Druckanstieg führt zu einer großen Kraftänderung, die der Ausdehnung des Federmediums im größeren Federspeicher 40a entgegenwirkt.

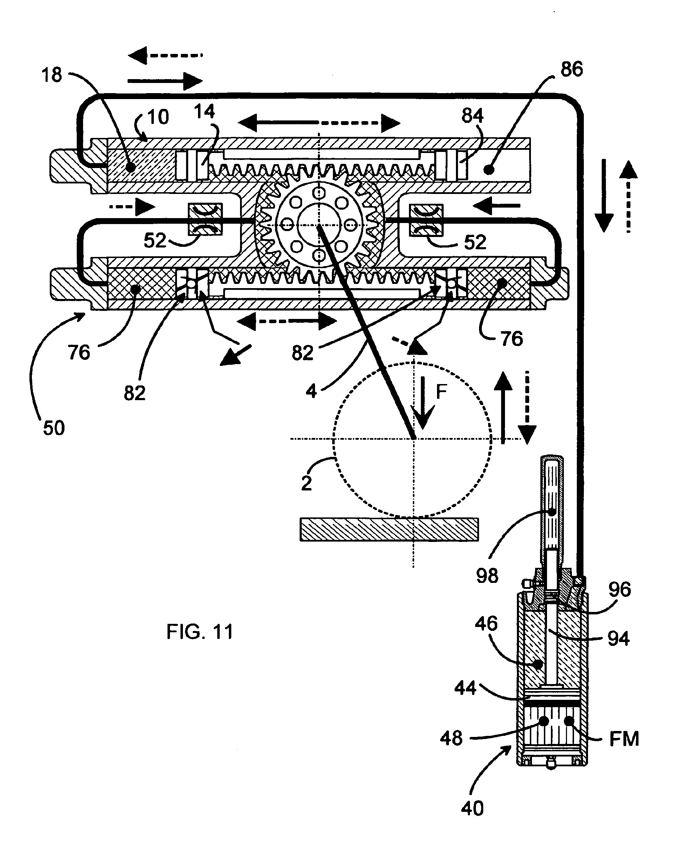

Fig. 11 zeigt eine weitere Variante zu den Ausführungen nach Fig. 9 und 10. Hierbei ist - anstelle des gegenläufigen Federzylinders 10 bzw. 10a - vorgesehen, dass die Temperaturkompensation direkt in den Federspeicher 40 integriert ist. In der dargestellten Ausführung weist hierzu der Trennkolben 44 des Federspeichers 40 eine Kolbenstange 94 auf, die sich axial durch den Speicherraum 46 erstreckt und abgedichtet durch eine Zwischenwand 96 hindurch in einen zusätzlichen Druckraum 98 ragt. Dieser Druckraum 98 ist mit einem insbesondere pneumatischen Gegendruck beaufschlagbar. Dehnt sich nun das Federmedium FM in der Federkammer 48 beispielsweise temperaturbedingt aus, so wird der Trennkolben 44 in Richtung des Speicherraums 46 verschoben. Dadurch wird zudem die Kolbenstange 94 weiter in den Druckraum 98 hineinverschoben. Da sich in diesem Druckraum 98 ein relativ kleines Gasvolumen befindet, führt eine kleine Verschiebung der Kolbenstange 94 in diesen Druckraum 98 hinein zu einer großen Änderung des Gasdruckes. Dieser Gasdruck wirkt auf die Kolbenstange 94 und baut so eine Kraft gegen den Gasdruck des größeren Volumens der Federkammer 48 auf. Diese Steuerung hat einen immer größeren Einfluß, je höher der Fülldruck des kleineren Druckraums 98 ist. Diese vorteilhafte Ausgestaltung im Bereich des Federspeichers 40 führt zu dem Vorteil, dass kein zusätzlicher Aufwand für eine Kompensierung einer temperaturbedingten Niveauänderung der Federung erforderlich ist, weil die Verlagerung nur so geringfügig ist, dass sie durchaus als technisch vertretbare Niveauänderung hingenommen werden kann.

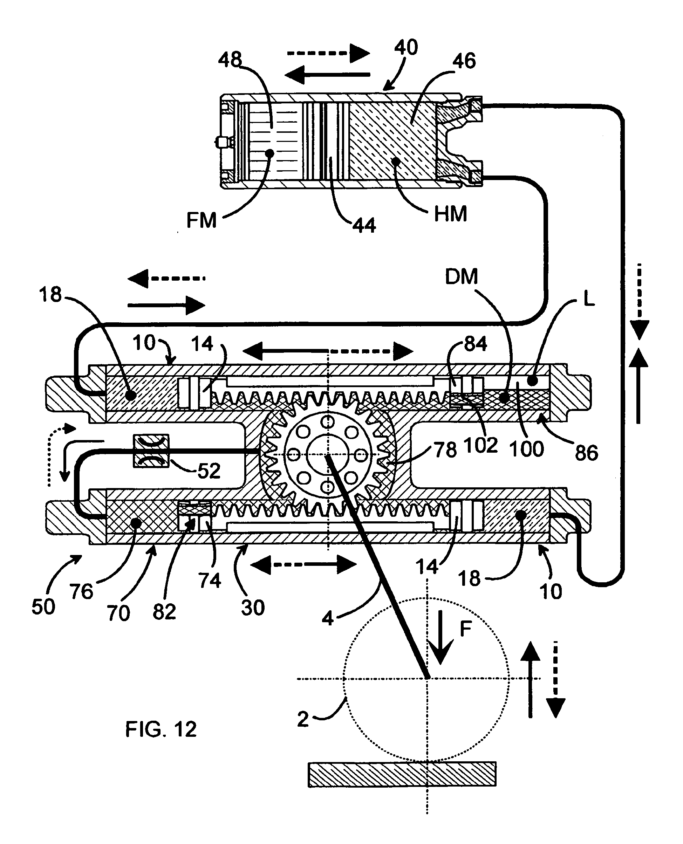

Die in Fig. 12 dargestellte Ausführungsform entspricht bezüglich des Federungskreislaufs der Ausführung nach Fig. 5 mit zwei gleichwirkenden und mit einem gemeinsamen Federspeicher 40 zusammenwirkenden Federzylindern 10, die allerdings auch im Sinne von Fig. 6 mit zwei separaten Federspeichern 40 verbunden sein können. Die Dämpfungseinrichtung 50 ist auch hierbei unabhängig von dem Federungskreislauf, allerdings ist hierbei nur ein Dämpferzylinder 70 vorgesehen, dessen Zylinderraum 76 über das Dämpfungsventil 52 mit dem Gehäuseraum 78 verbunden ist. Der Dämpferkolben 74 ist auch hierbei mit einem Nachsaugventil 82 ausgestattet. Hierbei ist bevorzugt vorgesehen, dass im Bereich des Zylinderabschnittes 86 ein Ausgleichsraum 100 für das Dämpfungsmedium DM gebildet ist. Dieser Ausgleichsraum 100 wird von dem Gehäuseraum 78 über den Kolben 84 getrennt, wobei aber der Kolben 84 eine Strömungsöffnung 102 aufweist. Da bei den Federungsbewegungen das Volumen des in den Dämpfungskreislauf einbezogenen Gehäuseraums 78 stets konstant bleibt, dient der Ausgleichsraum 100 als Tank zur Aufnahme des jeweils aus dem Zylinderraum 76 des Dämpferzylinders 70 verdrängten bzw. zurückströmenden Volumens des Dämpfungsmediums DM. Der Ausgleichsraum 100 enthält zudem ein Luftpolster L, welches mindestens so groß ist, dass es den maximalen Volumenunterschied der Dämpfungseinrichtung 50 ausgleichen kann.

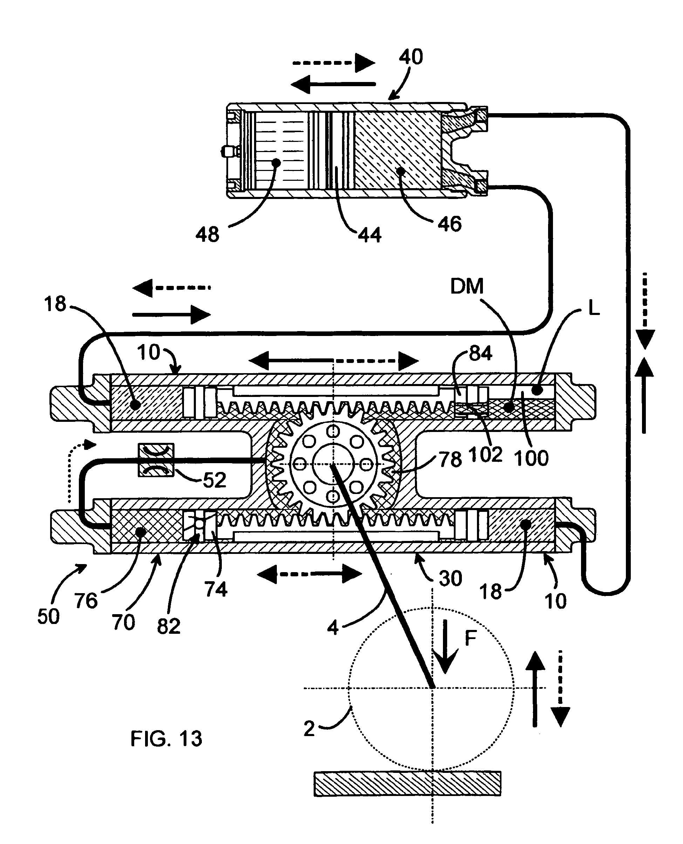

Die Ausführung gemäß Fig. 13 entspricht derjenigen gemäß Fig. 12, jedoch ist der Strömungsweg im Dämpfungskreislauf so gestaltet, dass bei Verdrängung des Dämpfungsmediums DM aus dem Zylinderraum 76 dieses nur über das Dämpfungsventil 52 strömt, aber das erforderliche Hineinströmen im umgekehrten Fall einer Vergrößerung des Zylinderraums 76 nur über das Nachsaugventil 82 im Dämpferkolben 74 erfolgt. Diese Lösung hat den Vorteil, dass das Dämpfungsventil 52 einfacher und somit kostengünstiger gestaltet sein kann.

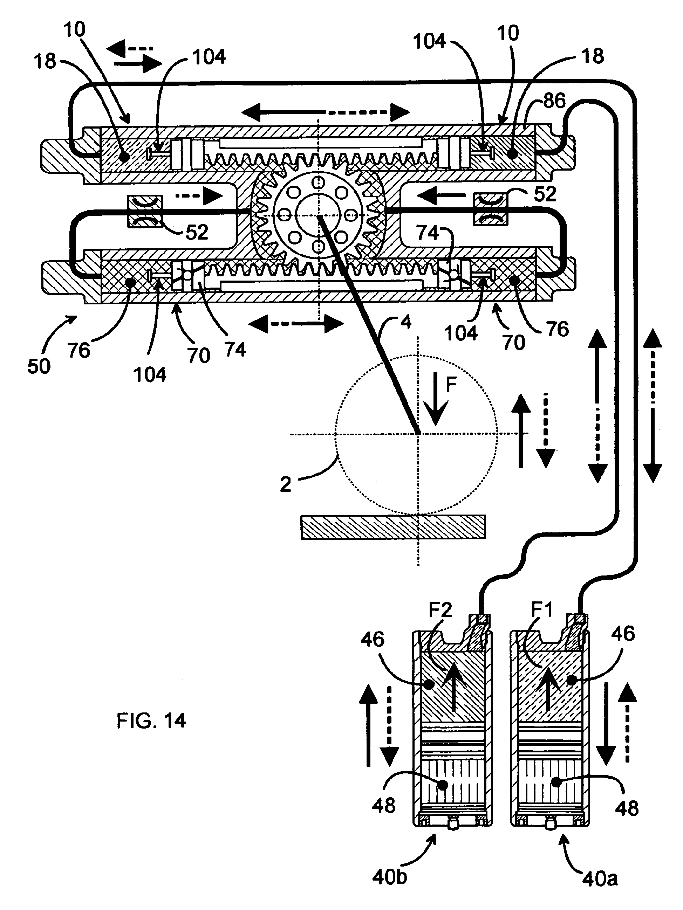

Anhand der Fig. 14 wird eine vorteilhafte Weiterbildung erläutert, hier beispielhaft auf der Grundlage der Ausführung nach Fig. 9. Gemäß dieser Weiterbildung ist eine hydraulische Endlagendämpfung vorgesehen, wozu zumindest in jedem Federzylinder 10 eine wegabhängige hydraulische Drosseleinrichtung 104 integriert ist. Vorzugsweise können auch - alternativ oder zusätzlich - die Dämpferzylinder 70 mit entsprechenden Drosseleinrichtungen 104 ausgestattet sein. Diese Drosseleinrichtungen 104 bewirken, dass in beiden Richtungen gegen Ende des Federungshubes die Bewegung so abgebremst wird, dass harte mechanische Stöße am Ende der Federungsbewegungen vermieden werden.

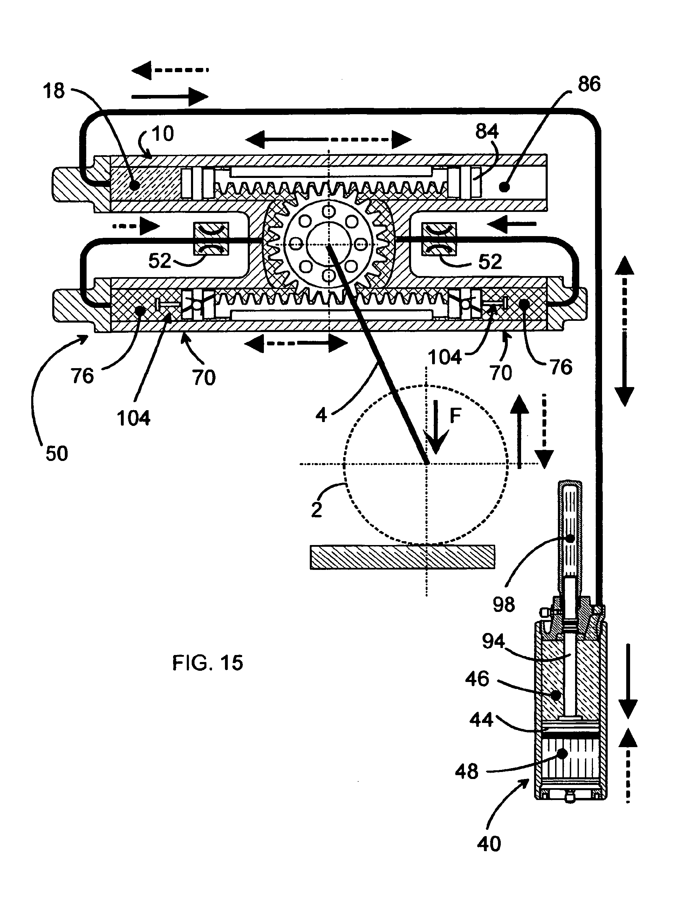

In Fig. 15 ist diese Ausgestaltung beispielhaft bei der Ausführung der Federungseinrichtung 1 gemäß Fig. 11 veranschaulicht. Hierbei ist jedoch nur jeder Dämpferzylinder 70 mit einer Drosseleinrichtung 104 ausgestattet. In beiden Ausführungen gemäß Fig. 14 und 15 kann die Wirkung der Endlagendämpfung bzw. der Drosseleinrichtungen 104 den jeweiligen Ein- und Ausfederungsbedingungen angepaßt werden. Dies ist zweckmäßig, da üblicherweise die Einfederungsgeschwindigkeit höher ist als die Ausfederungsgeschwindigkeit des Rades 2.

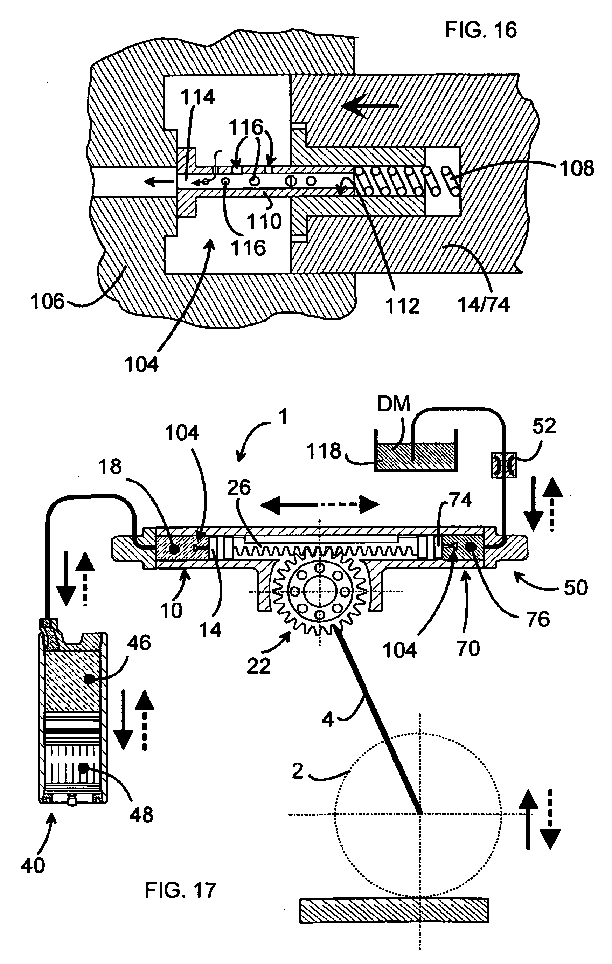

In Fig. 16 ist beispielhaft eine konstruktive Lösung für die Drosseleinrichtung 104 veranschaulicht. Diese wegabhängige hydraulische Drosseleinrichtung 104 kann wahlweise in den jeweiligen Kolben 14 bzw. 74 (wie dargestellt) oder aber in einen Verschlußdeckel 106 des jeweiligen Zylinders eingebaut sein. Die Drosseleinrichtung 104 weist einen derart axial gegen eine Feder 108 verschiebbaren Stößel 110 auf, dass dieser ab einer bestimmten Stellung gegen Ende des Federungshubes schieberartig in eine Führung 112 eintaucht. Dabei weist der Stößel einen axialen Strömungskanal 114 auf, in den mehrere radiale, über die Länge verteilt angeordnete Queröffnungen 116 münden. Durch das Eintauchen des Stößels 110 in die Führung 112 werden bei Bewegung bis in die Endanschlagstellung die Queröffnungen 116 sukzessive nacheinander verschlossen. Dadurch wird der Strömungswiederstand sukzessive vergrößert, weil das hydraulische Medium nur über den Strömungskanal 114 des Stößels 110 aufströmen kann. Dadurch wird die jeweilige Bewegung sanft abgebremst; ein harter Endanschlag wird vorteilhafterweise vermieden.

In Fig. 17 ist eine vereinfachte Ausführungsform der Federungseinrichtung 1 veranschaulicht, bei der das Zahnradgetriebe 22 nur ein Zahnstangenelement 26 im Sinne der Fig. 1 bis 4 aufweist. Dabei ist das Zahnstangenelement 26 einseitig mit dem Kolben 14 des Federzylinders 10 und anderseitig mit dem Dämpferkolben 74 des Dämpferzylinders 70 verbunden. Der Federungskreislauf entspricht somit der Ausführung nach Fig. 3. Der Dämpfungskreislauf der Dämpfungseinrichtung 50 weist einen mit dem Zylinderraum 76 über das Dämpfungsventil 52 verbundenen Tank 118 auf, in den das Dämpfungsmedium DM beim Ausfedern des Rades 2 verdrängt bzw. aus dem das Dämpfungsmedium DM beim Einfedem angesaugt wird. Diese Ausführung nach Fig. 17 ist für Federungsaufgaben geeignet, bei denen die Federkräfte relativ niedrig sind.

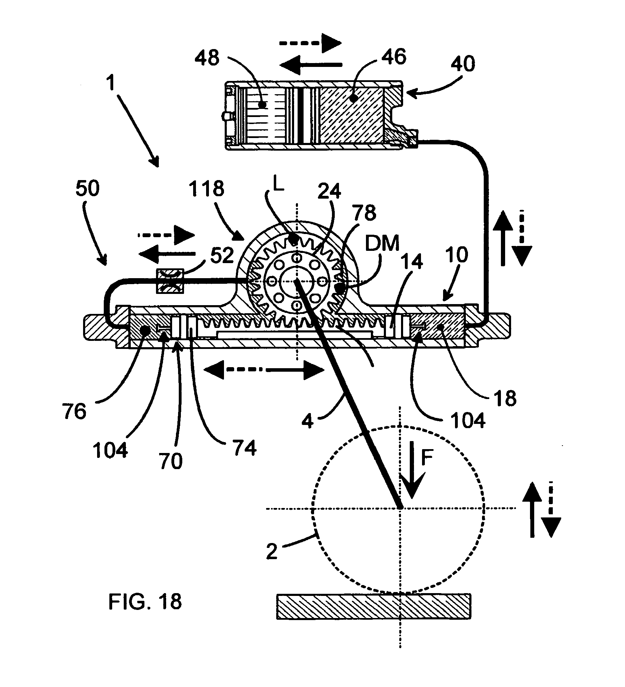

Bei der Ausführungsform gemäß Fig. 18 wird der das Zahnradgetriebe 22 aufnehmende Gehäuseraum 78 als Tank 118 des Hydraulikkreislaufs der Dämpfungseinrichtung 50 genutzt. Bei dieser Ausführung ist das Zahnradelement 24 vertikal oberhalb des Zahnstangenelementes 26 angeordnet, und innerhalb des Gehäuseraums 78 (Tank 118) ist oberhalb des Dämpfungsmediums DM ein Luftpolster L enthalten. Funktionell entspricht dies den Ausführungen gemäß Fig. 12 und 13. Das Luftvolumen L muß so bemessen sein, dass das aus dem Zylinderraum 76 verdrängte Volumen zuzüglich einer eventuellen Wärmeausdehnung vom Tank 118 aufgenommen werden kann. Da das Zahnradelement 24 oberhalb des Zahnstangenelementes 26 angeordnet ist, steht der Ölspiegel höher als der Zylinderraum 76 des Dämpferzylinders 70. Durch diese Anordnung fließt das Dämpfungsmedium DM bei einer Vergrößerung des Zylinderraums 76 besser in diesen hinein, als wenn der Tank 118 unterhalb des Zylinderraums 76 angeordnet ist, da dabei das Medium angesaugt werden müßte.

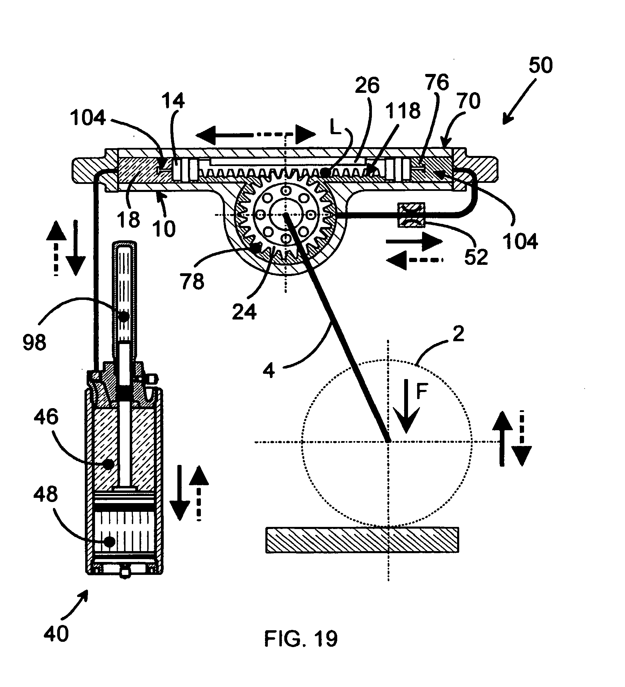

Eine solche Ausführung ist in Fig. 19 veranschaulicht. Demgemäß ist das Zahnradelement 24 vertikal unterhalb des Zahnstangenelementes 26 angeordnet, wodurch der Tank 118 im Wesentlichen unterhalb des Zylinderraums 76 des Dämpferzylinders 70 liegt und somit das Dämpfungsmedium DM bei einer Vergrößerung des Zylinderraums 76 angesaugt werden muß. Dies kann mit Vorteil dadurch unterstützt werden, dass der Tank 118 mit einem nicht dargestellten Druckspeicher verbunden wird, der den Tankraum unter einen Druck von beispielsweise etwa 5 bar setzt. Die in Fig. 19 vorgesehene Anordnung des Zahnradelementes 24 auf der Seite, auf der auch das Rad 2 über den Schwingentragarm 4 aufgehängt ist, hat gegenüber Fig. 18 den Vorteil einer günstigeren Kraftverteilung; hierzu wird nochmals auf Fig. 4 hingewiesen.

An dieser Stelle sei allgemein bemerkt, dass die Ausführungsformen mit zwei Zahnstangenelemeten 26 für eine Entlastung der Lagerstelle des Zahnradelementes 24 eigentlich weniger Bedeutung haben; der Vorteil der doppelten Zahnstangenanordnung liegt hauptsächlich in der Aufteilung der hydraulischen Kräfte und der hierdurch hervorgerufenen Zahnbelastung der Verzahnungen des Zahnradgetriebes 22. Die Ausführungen mit nur einem Zahnstangenelement haben vor allem den Vorteil einer sehr kompakten Bauform, da die Raumverhältnisse in einem Fahrzeug oftmals derart beschränkt sind, dass ein etwas stärkeres Zahnradelement mit stärkerem Zahnstangenelement räumlich besser unterzubringen ist, als eine doppelte Ausführung in einer eventuell flacheren Bauweise.

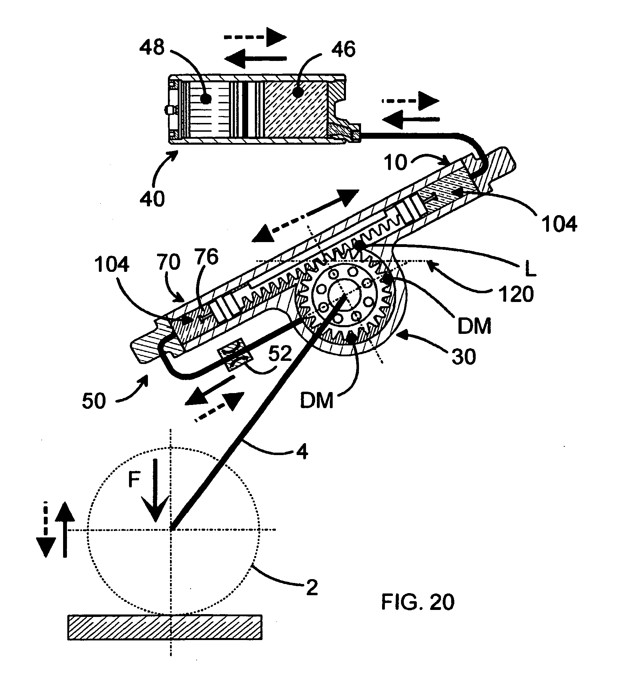

Wie in Fig. 20 veranschaulicht ist, kann beispielsweise die Ausführung gemäß Fig. 18 in einer derart schräg ausgerichteten Einbaulage angeordnet sein, dass der Dämpferzylinder 70 mit seinem Zylinderraum 76 jedenfalls stets vertikal unterhalb der Trennlinie 120 zwischen Dämpfungsmedium DM und Luftpolster L angeordnet ist. Dadurch ist stets gewährleistet, dass das Dämpfungsmedium DM in den Zylinderraum 76 fließt, wenn dieser größer wird. Diese Einbaulage ist aus Kostengründen gegenüber zusätzlichen Maßnahmen zu bevorzugen, sofern es die Einbausituation im jeweiligen Fahrzeug zuläßt.

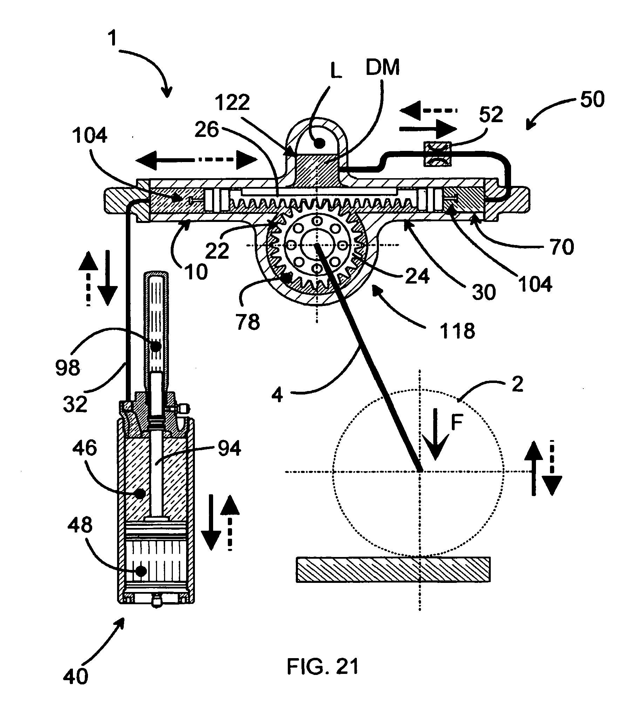

Bei der weitgehend der Ausführung nach Fig. 19 entsprechenden Ausführung gemäß Fig. 21 ist als vorteilhafte Ausgestaltung veranschaulicht, dass durch Schaffung eines zusätzlichen Raumes 122 das Volumen des Tanks 118 vergrößert werden kann, was günstig für den Wärmehaushalt des Dämpfungsmediums DM ist, denn je größer das Volumen des Dämpfungsmediums DM ist, um so geringer erwärmt sich dieses. Dabei liegt der zusätzliche Raum 122 vorzugsweise vertikal oberhalb des Zahnradgetriebes 22. Mit Vorteil kann der zusätzlich Raum 122 durch eine etwa glockenartige Gehäuseerweiterung gebildet sein. Ein weiterer Vorteil dieser Ausgestaltung ist, dass das gesamte Zahnradgetriebe 22 einschließlich des vertikal oberhalb des Zahnradelementes 24 angeordneten Zahnstangenelementens 26 vollständig im Ölbad läuft und dadurch der Verschleiß reduziert werden kann.

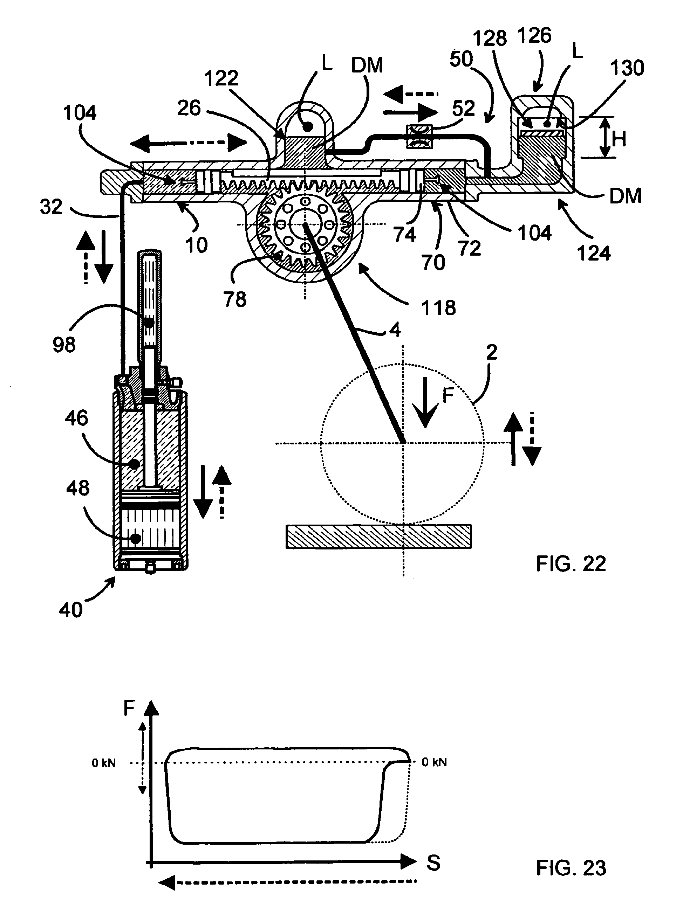

Anhand der Fig. 22 wird beispielhaft für die Ausführung nach Fig. 21 eine vorteilhafte Weiterbildung im Bereich der Dämpfungseinrichtung 50 erläutert. Dabei handelt es sich um eine Zusatzeinrichtung 124 derart, dass geringfügige Federungsbewegungen, und zwar vorteilhafterweise gerade auch in Ausfederungsrichtung, nahezu ohne Dämpfung des Dämpfungsmediums DM möglich sind, während eine Dämpfung erst ab einem bestimmten Federweg automatisch einsetzt. Hierzu ist der Zylinderraum 76 des Dämpferzylinders 70 direkt mit einem Speicherraum 126 verbunden, in dem zwischen dem Dämpfungsmedium DM und einem Luftpolster L ein scheibenförmiges Anschlagelement 128 frei beweglich ist. Dieses Anschlagelement 128 schwimmt praktisch auf dem Ölspiegel des Dämpfungsmediums DM. Strömt nun bei einer Federungsbewegung Dämpfungsmedium DM in den Speicherraum 126 hinein, so wird durch den ansteigenden Ölspiegel das Anschlagelement 128 gegen das Luftpolster L angehoben. Diese Bewegung wird allerdings in einer einem bestimmten Federweg entsprechenden Stellung durch eine innere Anschlagstufe 130 innerhalb des Speicherraums 126 begrenzt.

Sinn und Arbeitsprinzip dieser Ausführung sind wie folgt:

Federt das Rad 2 um einen geringen Weg von beispielsweise etwa 50 mm ein, so ist bei dieser Einfederung ausschließlich eine Dämpfung durch Strömungsverluste in der Leitung 32 zwischen Federzylinder 10 und Federspeicher 40 gegeben. Die Dämpfungseinrichtung 50 hat beim Einfedern keine Dämpfungswirkung. Federt das Rad 2 nachfolgend aus, so schiebt sich das Zahnstangenelement 26 in Richtung des Zylinderraums 46 des Dämpferzylinders 70 (in Fig. 22 nach rechts). Dadurch wird aus dem Zylinderraum 76 Dämpfungsmedium DM verdrängt. Ein entsprechendes Volumen fließt in Richtung des Dämpfungsventils 52, und dort baut sich ein Druck auf. Daher ist es für das Dämpfungsmedium DM nun einfacher, in den zusätzlichen Speicherraum 126 zu strömen, denn dieser Strömung wirkt lediglich ein geringer Widerstand entgegen, der aus dem Anheben des Anschlagelementes 126 gegen das Luftpolster L resultiert. Das Anschlagelement 128 wird weiterhin so weit angehoben, bis es sich an die Anschlagstufe 130 anlegt. Bis zu dieser Stellung erfolgt praktisch keine Dämpfung. Ist allerdings die Anschlagstellung erreicht, so kann der Speicherraum 126 kein weiteres Volumen des Dämpfungsmediums DM mehr aufnehmen. Bei weitergehender Ausfederungsbewegung steht dem Dämpfungsmedium DM folglich nur noch der Weg über das Dämpfungsventil 52 zur Verfügung. Es setzt folglich die Dämpfungswirkung ein.

Diese modifizierte Dämpfung ist im Diagramm nach Fig. 23 veranschaulicht. Wie in diesem Diagramm zu erkennen ist, ist ausgehend von der statischen Lage (Kraft = 0) in Einfederungsrichtung (durchgezogene Pfeile) nur eine sehr geringe Dämpfung (Leitungsdämpfung) vorhanden. In Ausfederungsrichtung (gestrichelte Pfeilrichtung) erkennt man auf der rechten Seite des Diagrammes, dass zuerst keine Dämpfung vorhanden ist, da die Kraft der Null-Linie folgt. Erst nach einer kurzen Wegstrecke baut sich die Dämpfung in Ausfederungsrichtung auf.

Der Vorteil dieser verzögerten Dämpfung ist, dass bei kleinen Hubbewegungen praktisch keine Dämpfung vorhanden ist und somit sich auch keine Wärme durch die Dämpfung entwickeln kann. Dieser Vorteil macht sich bei Fahrten über relativ glatte Straßen bemerkbar. Bei glatteren Straßen, z. B. Autobahnen, federt die Fahrzeugfederung sehr häufig in kleinen Hüben. Dies führt zu einer enormen Erwärmung des Dämpfungsmediums, wenn kein dämpfungsfreier Weg vorhanden ist.

Eine ähnliche Wirkung könnte zwar auch durch andere Maßnahmen erreicht werden, wie beispielsweise durch eine nutartige Ausnehmung in der Zylinderwandung im Dämpferzylinder 70 derart, dass um die statische Lage praktisch ein Bypass um den Dämpferkolben 74 vorhanden ist und somit keine Dämpfungswirkung entsteht. Die zuvor beschriebene Lösung gemäß Fig. 22 hat allerdings den entscheidenden Vorteil, dass die Dämpfungsverzögerung durch das Zusatzvolumen in jeder Stellung des Zahnstangenelementes wirken kann. Dies hat eine-vorteilhafte Bedeutung für den Fall, dass eine Niveauänderung der Federung vorgesehen ist. Würde das Fahrzeug durch Zufuhr von Medium auf ein anderes Niveau eingestellt, so würde die Ausnehmung im Dämpferzylinder 70 durch eine andere Relativstellung des Dämpferkolbens 74 keine Wirkung mehr haben bzw. die Dämpfung würde an einer falschen Position des Radhubes einsetzen. Die bevorzugte Lösung gemäß Fig. 22 arbeitet aber stets bei einer Umkehr der Bewegung von der Einfederung zur Ausfederung.

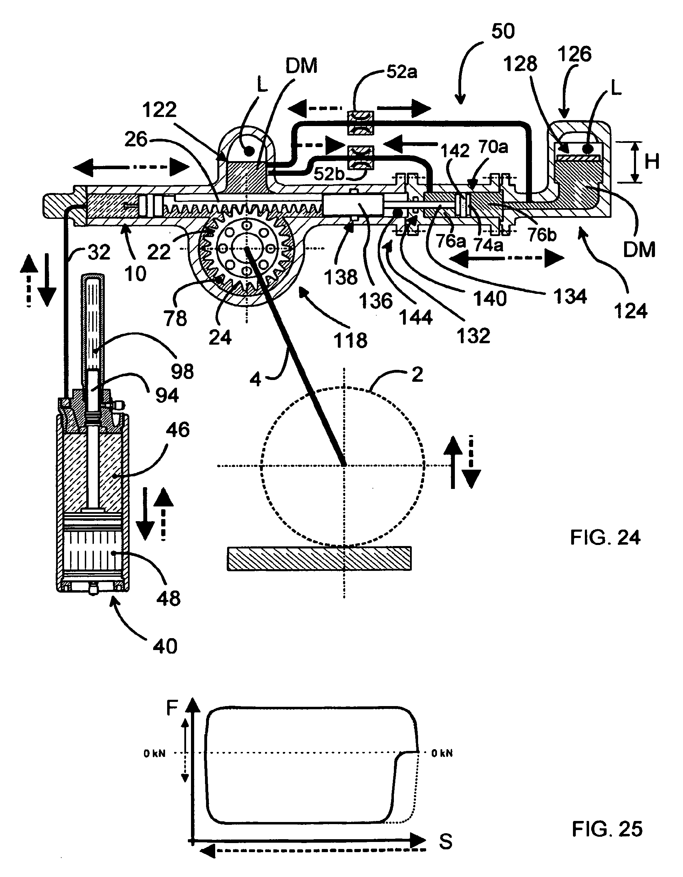

In Fig. 24 ist eine weitere Variante der Dämpfungseinrichtung 50 veranschaulicht, die es ermöglicht, auch in Einfederungsrichtung - zusätzlich zu der Leitungsdämpfung zwischen Federzylinder 10 und Federspeicher 40 - eine gezielte Dämpfung zu erreichen. Dies wird mit einer weiteren Zusatzeinrichtung 132 erreicht. Dazu ist der Dämpferzylinder 70a als doppelt wirkende Zylindereinheit ausgebildet, indem der Dämpfungskolben 74a innerhalb des Zylinders 72a einen Ringraum 76a von einem Kolbenraum 76b trennt. Der Dämpferkolben 74a ist über eine Kolbenstange 134 mit einem Führungskolben 136 verbunden, der seinerseits mit dem Zahnstangenelement 26 verbunden ist und sich daher entsprechend den Federungsbewegungen verschiebt und über die Kolbenstange 134 den Dämpferkolben 74a entsprechend bewegt. Der Führungskolben 136 ist als Abschluß des Gehäuseraums 78 und des darin gebildeten Tanks 118 gegen das Gehäuse über eine erste Dichtung 138 abgedichtet. Die Kolbenstange 134 ist über eine zweite Dichtung 140 im Gehäuse abgedichtet und der Dämpferkolben 74a weist eine dritte Dichtung 142 (Kolbenring) auf. Die zweite Dichtung 140 trennt den die Kolbenstange 134 umschließenden Ringraum 76a von einer mit Luft gefüllten Kammer 144, die zwischen der ersten Dichtung 138 und der zweiten Dichtung 140 gebildet ist. Der Kolbenraum 76b ist vorzugsweise mit der oben beschriebenen Zusatzeinrichtung 124 bzw. mit dem Speicherraum 126 verbunden. Zur Dämpfung ist der Kolbenraum 76b weiterhin über ein erstes Dämpfungsventil 52a mit dem Tank 118 verbunden, und der Ringraum 76a ist über ein zweites Dämpfungsventil 52b ebenfalls mit dem Tank 118 verbunden.

Durch die erste Dichtung 138 ist gewährleistet, dass sich der im Gehäuseraum 78 gebildete Tank nicht durch die Bewegungen des Zahnstangenelementes 26 vergrößert oder verkleinert. Statt dessen tritt nur eine Volumenveränderung im Bereich der Kammer 144 auf, was aber aufgrund der darin enthaltenen Luft unerheblich ist.

Wie sich aus dem zugehörigen Diagramm in Fig. 25 ergibt, wird durch diese beschriebene Ausgestaltung auch in Einfederungsrichtung eine bestimmte Dämpfung erreicht. In Ausfederungsrichtung wirkt hierbei vorzugsweise wiederum entsprechend Fig. 22 und 23 die verzögert einsetzende Dämpfung. Bei der Einfederung ist eine Dämpfungsverzögerung nicht erforderlich, da die Einfederungsrichtung ohnehin im Verhältnis zur Ausfederung relativ wenig gedämpft wird und somit auch entsprechend wenig Wärme entsteht.

Anhand des Diagramms in Fig. 27 wird deutlich, dass auch eine - nicht dargestellte - Ausführung möglich ist, wobei für besondere Anwendungsfälle, beispielsweise Geländefahrzeuge, die Einfederungsrichtung höher gedämpft wird. Zudem kann auch in Einfederungsrichtung eine Dämpfungsverzögerung eingebaut werden.

In Fig. 28 und 29 sind zwei Ausführungsbeispiele veranschaulicht, wobei im Bereich der Zylinder und Kolben eine "kinematische Umkehr" vorgesehen ist. Dies bedeutet, dass hier der bzw. jeder Kolben über eine oder mehrere Kolbenstangen 146 ortsfest an Trägerelementen 148 abgestützt ist, während der bzw. jeder Zylinder über das jeweilige Zahnstangenelement 26 angetrieben wird. Im Falle der Fig. 28 handelt es sich um eine Ausführung mit nur einer, insbesondere oberhalb des Zahnradelementes 24 angeordneten Zylinder-Kolben-Einheit, während die Ausführung gemäß Fig. 29 eine doppelte Lösung darstellt.

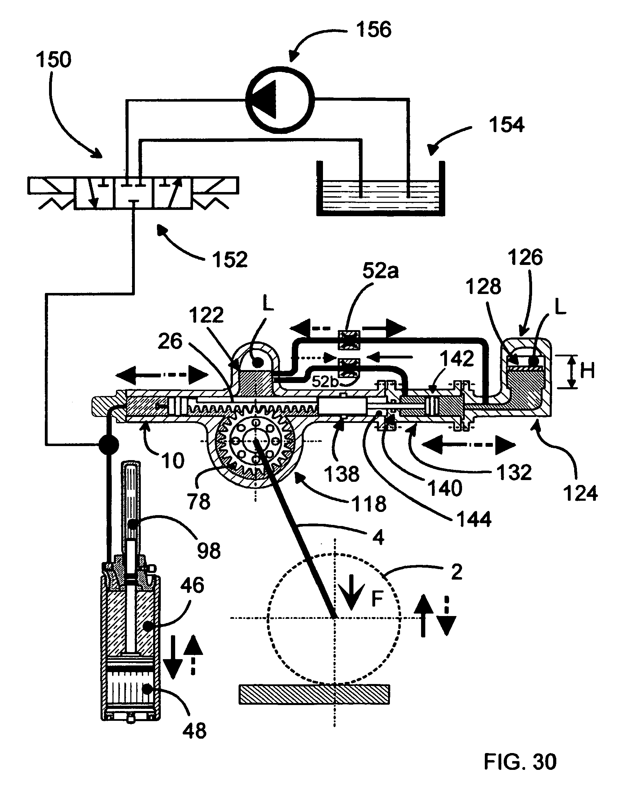

In Fig. 30 ist beispielhaft anhand der Ausführung nach Fig. 24 veranschaulicht, dass die Federungseinrichtung 14 zusätzlich mit einer Nivelliereinrichtung 150 ausgerüstet sein kann. Diese Nivelliereinrichtung 150 ist an den Federungskreislauf angeschlossen, um Hydraulikmedium zur Änderung des statischen Fahrzeugniveaus zuführen oder ablassen zu können. Dazu besteht die Nivelliereinrichtung 150 aus einem Schaltventil 152, einem Tank 154 und einer Pumpe 156. Das Schaltventil 152 ist als 3/3-Wegeventil ausgeführt und in der dargestellten Stellung geschlossen. In einer ersten Schaltstellung läßt sich die Pumpe 156 mit dem Federungskreislauf verbinden, um Hydraulikmedium zuzuführen und dadurch das Niveau anzuheben. In einer zweiten Schaltstellung wird der Federungskreislauf mit dem Tank 154 verbunden, um zur Niveau-Absenkung Hydraulikmedium abzulassen. Diese Niveauänderung erfolgt deshalb, weil sich ja das gesamte Gewicht des Fahrzeugs nicht ändert.

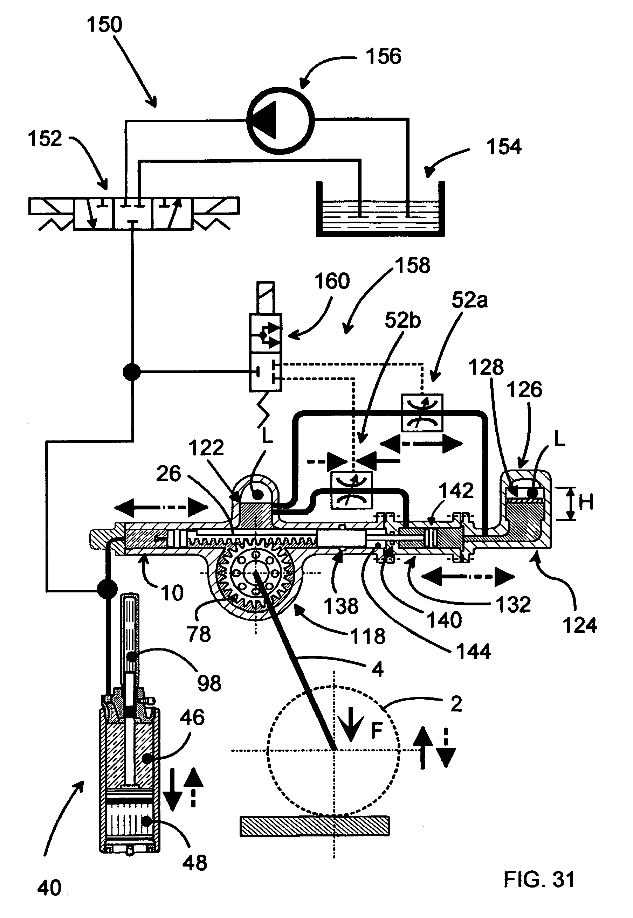

Was schließlich noch die Ausführung gemäß Fig. 31 betrifft, so ist dabei eine Einrichtung 158 zur Änderung der Dämpfungscharakteristik vorgesehen. Dabei ist das bzw. jedes Dämpfungsventil 52 bzw. 52a, b zur Veränderung der Dämpfungswirkung verstellbar und dazu mit einem Steuerdruck beaufschlagbar. Dieser Steuerdruck kann mit Vorteil der jeweilige von der Last abhängige Druck innerhalb des hydraulischen Federkreislaufs sein. Dieser Druck kann über ein Schaltventil 160 kurzzeitig auf das jeweilige Dämpfungsventil geschaltet werden. Hierdurch wird vorteilhafterweise erreicht, dass eine Anpassung der Dämpfung an den jeweiligen Beladungszustand des Fahrzeugs möglich ist.

Die Erfindung ist nicht auf die konkret dargestellten und beschriebenen Ausführungsbeispiele beschränkt, sondern umfaßt auch alle im Sinne der Erfindung gleichwirkenden Ausführungen. Die unterschiedlichen Ausführungsformen und die dabei jeweils vorhandenen Merkmale können in beliebigen geeigneten Kombinationen Verwendung finden.

## Patentansprüche

1. Federungseinrichtung (1) zur lasttragenden und federnden Abstützung eines Rades (2) in einem Kraftfahrzeug, bestehend aus mindestens einem Federzylinder (10) mit einem in einem Druckzylinder (12) relativbeweglich geführten Kolben (14) und aus einer Antriebseinrichtung (20) zum Umsetzen von um eine Schwingenachse (8) oszillierenden Schwenkbewegungen eines Rad-Schwingentragarms (4) in die Relativbewegungen zwischen Druckzylinder (12) und Kolben (14), wobei der Kolben (14) zur Erzeugung einer lasttragenden Tragfederkraft (F) gegen ein elastisch kompressibles Federmedium (FM) wirkt, sowie mit einer Dämpfungseinrichtung (50) zum Dämpfen der Federungsbewegungen,
**dadurch gekennzeichnet, dass** die Dämpfungseinrichtung (50) einen separaten, von dem Federzylinder (10) und dem Federmedium (FM) unabhängigen Kreislauf eines hydraulischen Dämptungsmediums (DM) aufweist.

2. Federungseinrichtung nach Anspruch 1,
**dadurch gekennzeichnet, dass** die Antriebseinrichtung (20) als Zahnradgetriebe (22) ausgebildet ist.

3. Federungseinrichtung nach Anspruch 2
**dadurch gekennzeichnet, dass** das Zahnradgetriebe (22) aus einem mit dem Schwingentragarm (4) verbundenen oder verbindbaren, um die Schwingenachse (8) rotierend gelagerten, zumindest eine Teil-Umfangsverzahnung aufweisenden Zahnradelement (24) und einem mit dem Kolben (14) oder mit dem Druckzylinder (12) verbundenen Zahnstangenelement (26) besteht.

4. Federungseinrichtung nach einem der Ansprüche 1 bis 3,
**dadurch gekennzeichnet, dass** die Dämpfungseinrichtung (50) mindestens einen Dämpferzylinder (70) mit einem in einem Zylinder (72) relativbeweglich geführten Dämpferkolben (74) sowie mindestens ein hydraulisch mit dem Dämpferzylinder (70) verbundenes Dämpferventil (52) aufweist.

5. Federungseinrichtung nach einem der Ansprüche 1 bis 4,
**dadurch gekennzeichnet, dass** die Dämpfungseinrichtung (50) mit der gleichen Antriebseinrichtung (20) zusammenwirkt wie der/jeder Federzylinder (10).

6. Federungseinrichtung nach Anspruch 4 oder 5,
**dadurch gekennzeichnet, dass** einerseits der Federzylinder (10) und andererseits der Dämpferzylinder (70) von einem gemeinsamen Zahnstangenelement (26) des Zahnradgetriebes (22) angetrieben werden.

7. Federungseinrichtung nach Anspruch 4 oder 5,
**dadurch gekennzeichnet, dass** der/jeder Federzylinder (10) von einem ersten Zahnstangenelement (26) und der/jeder Dämpferzylinder (70) von einem zweiten Zahnstangenelement (26) angetrieben werden, wobei die Zahnstangenelemente (26) insbesondere im Wesentlichen parallel zueinander auf diametral gegenüberliegenden Seiten des Zahnradelementes (24) des Zahnradgetriebes (22) angeordnet sind.

8. Federungseinrichtung nach einem der Ansprüche 1 bis 7,
**gekennzeichnet durch** mindestens einen zusätzlichen, von der gleichen Antriebseinrichtung (20) angetriebenen Federzylinder (10).

9. Federungseinrichtung nach Anspruch 8,
**dadurch gekennzeichnet, dass** der zusätzliche, zweite Federzylinder (10) bezüglich des ersten Federzylinders (10) gleichwirkend angetrieben wird, so dass sich die von den Federzylindern (10) erzeugten Teil-Tragkräfte zur Gesamt-Tragkraft (F) addieren.

10. Federungseinrichtung nach Anspruch 8,
**dadurch gekennzeichnet, dass** der zusätzliche, zweite Federzylinder (10) bezüglich des ersten Federzylinders (10) jeweils gegenläufig angetrieben wird, so dass sich die Gesamt-Tragkraft (F) aus der Differenz aus zwei Teilkräften ergibt.

11. Federungseinrichtung nach einem der Ansprüche 1 bis 10,
**dadurch gekennzeichnet, dass** das Federmedium (FM) eine elastisch kompressible Flüssigkeit, wie Silikon oder dergleichen, mit einer Kompressibilität von mindestens 10 Vol.-% ist, wobei das Federmedium (FM) unmittelbar in dem/jedem Federzylinder (10) und eventuell in einem mit dem Federzylinder (10) verbundenen Speicherbehälter (36) enthalten ist.

12. Federungseinrichtung nach einem der Ansprüche 1 bis 10,
**dadurch gekennzeichnet, dass** dasFedermediurn(FM)alsein Gas in einem hydropneumatischen Federspeicher (40) enthalten ist, wobei der/jeder Federzylinder (10) mittelbar über ein Hydraulikmedium (HM) gegen das Federmedium (FM) wirkt.

13. Federungseinrichtung nach Anspruch 12,
**dadurch gekennzeichnet, dass** im Kreislauf des Hydraulikmediums (HM) mindestens ein Dämpfungsventil (52) angeordnet ist.

14. Federungseinrichtung nach einem der Ansprüche 1 bis 13,
**dadurch gekennzeichnet, dass** die Dämpfungseinrichtung (50) zwei Dämpferzylinder (70) mit jeweils gegensinnig im gleichen Umfang volumenveränderllchen Zylinderräumen (76) aufweist, wobei das Dämpfungsmedium (DM) bei den Federungsbewegungen jeweils zwischen den beiden Zylinderräumen (76) und dabei über ein Dämpfungsventil (52) hin- und herströmt.

15. Federungseinrichtung nach einem der Ansprüche 1 bis 14,
**dadurch gekennzeichnet, dass** die Dämpfungseinrichtung (50) einen in den Dämpfungskreislauf einbezogenen Tank (118) aufweist.

16. Federungseinrichtung nach einem der Ansprüche 2 bis 15,
**dadurch gekennzeichnet, dass** das Zahnradgetriebe (22) in einem Gehäuseraum (78) angeordnet ist, wobei der Gehäuseraum (78) in den Dämpfungskreislauf einbezogen und dazu mindestens zum Teil mit dem Dämpfungsmedium (DM) gefüllt ist.

17. Federungseinrichtung nach einem der Ansprüche 1 bis 16.
**gekennzeichnet durch** mindestens einen hydropneumatischen Federspeicher (40) mit einem freibeweglichen Trennkolben (44), der einen hydraulisch mit dem Federzylinder (10) verbundenen, ein Hydraulikmedium (HM) enthaltenden Speicherraum (46) von einer das gasförmige Federmedium (FM) enthaltenden Federkammer (48) trennt.

18. Federungseinrichtung nach Anspruch 17,
**dadurch gekennzeichnet, dass** derTrennkolben(44)aufseiner von der Federkammer (48) wegweisenden Seite unabhängig vom Druck des Hydraulikmediums (HM) mit einem Gegendruck beaufschlagbar ist.

19. Federungseinrichtung nach Anspruch 18,
**dadurch gekennzeichnet, dass** der Trennkolben (44) eine sich axial durch den Speicherraum (46) und abgedichtet durch eine Zwischenwand (96) in einen Druckraum (98) erstreckende Kolbenstange (94) aufweist, wobei die Kolbenstange (94) in dem Druckraum (98) mit dem insbesondere pneumatischen Gegendruck beaufschlagbar ist.

20. Federungseinrichtung nach einem der Ansprüche 1 bis 19,
**gekennzeichnet durch** eine hydraulische Endtagendämpfung insbesondere mit mindestens einer in den Federzylinder (10) und/oder in den Dämpferzylinder (70) integrierten, wegabhängigen hydraulischen Drosseleinrichtung (104) derart, dass eine Abbrernsung der Federungsbewegungen jeweils gegen Ende des Bewegungshubes vor Erreichen eines mechanischen Endanschlages gewährleistet ist.

21. Federungseinrichtung nach einem der Ansprüche 1 bis 20,
**dadurch gekennzeichnet, dass** die Dämpfungseinrichtung (50) eine Zusatzeinrichtung (124) derart aufweist, dass geringfügige Federungsbewegungen beidseitig einer statischen Lage nahezu ungedämpft sind, während eine Dämpfung automatisch erst ab einem bestimmten Federweg einsetzt.

22. Federungseinrichtung nach einem der Ansprüche 1 bis 21,
**dadurch gekennzeichnet, dass** die Dämpfungseinrichtung (50) eine Dämpfung in Ausfederungsrichtung und gegebenenfalls auch in Einfederungsrichtung bewirkt.

23. Federungseinrichtung nach Anspruch 22,
**dadurch gekennzeichnet, dass** der Dämpfungszylinder (70a) als doppelt wirkende Kolben-Zylindereinheit mit einem ersten Druckraum (76a) und einem zweiten Druckraum (76b) ausgebildet ist, wobei die Druckräume (76a , 76b) mit jeweils einem separaten Dämpfungsventil (52a, 52b) verbunden sind.

24. Federungseinrichtung nach einem der Ansprüche 1 bis 23,
**gekennzeichnet durch** eine hydraulische Nivelliereinrichtung (150) derart, dass ein statisches Fahrzeug-Niveau **durch** Zuführen oder Ablassen von Hydraulikmedium (HM) in den oder aus dem Federkreislauf veränderbar ist.

25. Federungseinrichtung nach einem der Ansprüche 1 bis 24,
**gekennzeichnet durch** eine Einrichtung (158) zur Änderung der Dämpfungscharakteristik, wobei mindestens ein verstellbares Dämpfungsventil (52; 52a, b) kurzzeitig über ein Schaltventil (160) mit einem - insbesondere lastabhängigen - Steuerdruck beaufschlagbar ist.

## Claims

1. A suspension device (1) for the load-bearing and sprung supporting of a wheel (2) in a motor vehicle, consisting of at least one spring cylinder (10) with a piston (14) guided in a pressure cylinder (12) so as to be movable relative thereto and of a drive device (20) for the conversion of swinging motions, oscillating about a swinging-arm axis (8), of a wheel swinging arm support arm (4) into the relative movements between the pressure cylinder (12) and the piston (14), wherein the piston (14) acts against a resiliently compressible spring medium (FM) to produce a load-bearing supporting spring force (F), as well as having a damping device (50) to damp the suspension movements, **characterised in that** the damping device (50) has a separate circuit, independent of the spring cylinder (10) and the spring medium (FM), of an hydraulic damping medium (DM).

2. A suspension device according to claim 1, **characterised in that** the drive device (20) is in the form of a gear drive (22).

3. A suspension device according to claim 2, **characterised in that** the gear drive (22) is composed of a toothed wheel element (24), connected or connectable to the swinging arm support arm (4), mounted so as to rotate about the swinging-arm axis (8) and having toothing over at least part of its circumference, and of a rack element (26) connected to the piston (14) or to the pressure cylinder (12).

4. A suspension device according to any one of claims 1 to 3, **characterised in that** the damping device (50) has at least one damper cylinder (70), with a damper piston (74) guided in a cylinder (72) so as to be movable relative thereto, as well as at least one damper valve (52) hydraulically connected to the damper cylinder (70).

5. A suspension device according to any one of claims 1 to 4, **characterised in that** the damping device (50) cooperates with the same drive device (20) as the/each spring cylinder (10).

6. A suspension device according to claim 4 or 5, **characterised in that** on the one hand the spring cylinder (10) and on the other hand the damper cylinder (70) are driven by a common rack element (26) of the gear drive (22).

7. A suspension device according to claim 4 or 5, **characterised in that** the/each spring cylinder (10) is driven by a first rack element (26) and the/each damper cylinder (70) by a second rack element (26), wherein the rack elements (26) are in particular arranged substantially parallel to one another, on diametrically opposite sides of the toothed wheel element (24) of the gear drive (22).

8. A suspension device according to any one of claims 1 to 7, **characterised by** at least one additional spring cylinder (10) driven by the same drive device (20).

9. A suspension device according to claim 8, **characterised in that** the additional, second spring cylinder (10) and the first spring cylinder (10) are driven in a manner having the same effect, so that the partial supporting forces generated by the spring cylinders (10) add up to the total supporting force (F).

10. A suspension device according to claim 8, **characterised in that** the additional, second spring cylinder (10) is in each case driven in an opposite direction to the first spring cylinder (10), so that the total supporting force (F) results from the difference between two partial forces.

11. A suspension device according to any one of claims 1 to 10, **characterised in that** the spring medium (FM) is a resiliently compressible fluid, such as silicone or the like, with a compressibility of at least 10 percent by volume, wherein the spring medium (FM) is contained directly in the/each spring cylinder (10) and possibly in a storage vessel (36) connected to the spring cylinder (10).

12. A suspension device according to any one of claims 1 to 10, **characterised in that** the spring medium (FM) is contained as a gas in a hydropneumatic spring accumulator (40), wherein the/each spring cylinder (10) acts indirectly against the spring medium (FM) via an hydraulic medium (HM).

13. A suspension device according to claim 12, **characterised in that** at least one damping valve (52) is arranged in the circuit of the hydraulic medium (HM).

14. A suspension device according to any one of claims 1 to 13, **characterised in that** the damping device (50) has two damper cylinders (70) with cylinder chambers (76) each volume variable in an opposite direction to the same extent, wherein the damping medium (DM) in each case flows to-and-fro between the two cylinder chambers (76) and in the process via a damping valve (52) during the suspension movements.

15. A suspension device according to any one of claims 1 to 14, **characterised in that** the damping device (50) has a tank (118) included in the damping circuit.

16. A suspension device according to any one of claims 2 to 15, **characterised in that** the gear drive (22) is arranged in a housing chamber (78), wherein the housing chamber (78) is included in the damping circuit and for that is at least partially filled with the damping medium (DM).

17. A suspension device according to any one of claims 1 to 16, **characterised by** at least one hydropneumatic spring accumulator (40) with a freely movable separating piston (44) separating a storage chamber (46), hydraulically connected to the spring cylinder (10) and containing an hydraulic medium (HM), from a spring chamber (48) containing the gaseous spring medium (FM).

18. A suspension device according to claim 17, **characterised in that** the separating piston (44) can, independently of the pressure of the hydraulic medium (HM), be acted upon by a counterpressure on its side directed away from the spring chamber (48).

19. A suspension device according to claim 18, **characterised in that** the separating piston (44) has a piston rod (94) extending, axially through the storage chamber (46) and in a sealed manner through an intermediate wall (96), into a pressure chamber (98), wherein the piston rod (94) can be acted upon in the pressure chamber (98) by the, in particular pneumatic, counterpressure.

20. A suspension device according to any one of claims 1 to 19, **characterised by** an hydraulic end position damping, in particular with at least one stroke-dependent, hydraulic throttle device (104) integrated in the spring cylinder (10) and/or in the damper cylinder (70), in such a manner that a braking of the suspension movements is in each case guaranteed towards the end of the motion stroke before a mechanical end impact.

21. A suspension device according to any one of claims 1 to 20, **characterised in that** the damping device (50) has an additional device (124) in such a manner that slight suspension movements to either side of a static position are virtually undamped, while damping starts automatically only after a certain spring excursion has taken place.

22. A suspension device according to any one of claims 1 to 21, **characterised in that** the damping device (50) effects damping in the rebound direction and optionally also in the compression direction.

23. A suspension device according to claim 22, **characterised in that** the damping cylinder (70a) is in the form of a double-acting piston/cylinder unit with a first pressure chamber (76a) and a second pressure chamber (76b), wherein the pressure chambers (76a, 76b) are connected to a respective separate damping valve (52a, 52b).

24. A suspension device according to any one of claims 1 to 23, **characterised by** an hydraulic levelling device (150) in such a manner that a static vehicle-level is alterable through the feeding or discharge of hydraulic medium (HM) into or from the spring circuit.

25. A suspension device according to any one of claims 1 to 24, **characterised by** a device (158) to alter the damping characteristic, wherein at least one adjustable damping valve (52; 52a, b) can be acted upon short-term by an - in particular load-dependent - control pressure via a switchover valve (160).

## Revendications

1. Dispositif de suspension (1) destiné au soutien porteur de charge et élastique d'une roue (2) sur un véhicule, comprenant au moins un cylindre à ressort (10) avec un piston (14) guidé dans un cylindre à pression (12) avec une mobilité relative et un dispositif d'entraînement (20) pour la conversion de mouvements de basculement oscillant autour d'un axe de coulisse (8) d'un bras porteur à coulisse de roue (4) en déplacements relatifs entre le cylindre à pression (12) et le piston (14), dans lequel le piston (14) est destiné à produire une force de ressort porteur (F) portant la charge dans le sens contraire à un milieu à ressort (FM) élastiquement compressible, et un dispositif d'amortissement (50) pour l'amortissement des mouvements de suspension,
**caractérisé en ce que** le dispositif d'amortissement (50) présente un circuit séparé, indépendant du cylindre à ressort (10) et du milieu à ressort (FM), d'un milieu d'amortissement (DM) hydraulique.

2. Dispositif de suspension selon la revendication 1,
**caractérisé en ce que** le dispositif d'entraînement (20) est conçu sous la forme d'un engrenage (22).

3. Dispositif de suspension selon la revendication 2,
**caractérisé en ce que** l'engrenage (22) est constitué d'un élément de roue crantée (24) relié ou pouvant être relié au bras porteur à coulisse (4), monté à rotation autour de l'axe de coulisse (8), présentant au moins une denture périphérique partielle, et un élément de crémaillère (26) relié au piston (14) ou au cylindre à pression (12).

4. Dispositif de suspension selon l'une des revendications 1 à 3,
**caractérisé en ce que** le dispositif d'amortissement (50) présente au moins un cylindre amortisseur (70) avec un piston amortisseur (74) guidé dans un cylindre (72) avec une mobilité relative et au moins une vanne d'amortissement (52) reliée de façon hydraulique au cylindre amortisseur (70).

5. Dispositif de suspension selon l'une des revendications 1 à 4,
**caractérisé en ce que** le dispositif d'amortissement (50) coopère avec le même dispositif d'entraînement (20) que le/chaque cylindre à ressort (10).

6. Dispositif de suspension selon la revendication 4 ou 5,
**caractérisé en ce que** d'une part le cylindre à ressort (10) et d'autre part le cylindre amortisseur (70) sont entraînés par un élément de crémaillère (26) commun de l'engrenage (22).

7. Dispositif de suspension selon la revendication 4 ou 5,
**caractérisé en ce que** le/chaque cylindre à ressort (10) est entraîné par un premier élément de crémaillère (26) et le/chaque cylindre amortisseur (70) par un second élément de crémaillère (26), dans lequel les éléments de crémaillère (26) sont disposés en particulier sensiblement parallèlement entre eux sur des côtés diamétralement opposés de l'élément de crémaillère (24) de l'engrenage (22).

8. Dispositif de suspension selon l'une des revendications 1 à 7,
**caractérisé par** au moins un cylindre à ressort (10) supplémentaire, entraîné par le même dispositif d'entraînement (20).

9. Dispositif de suspension selon la revendication 8,
**caractérisé en ce que** le second cylindre à ressort (10) supplémentaire est entraîné avec un effet identique par rapport au premier cylindre à ressort (10), de sorte que les forces portantes partielles générées par les cylindres à ressort (10) s'ajoutent pour former la force portante globale (F).

10. Dispositif de suspension selon la revendication 8,
**caractérisé en ce que** le second cylindre à ressort (10) supplémentaire est entraîné à chaque fois dans le sens contraire par rapport au premier cylindre à ressort (10), de sorte que la force portante globale (F) est le résultat de la différence de deux forces partielles.

11. Dispositif de suspension selon l'une des revendications 1 à 10,
**caractérisé en ce que** le milieu à ressort (FM) est un liquide élastiquement compressible, tel que du silicone ou similaire, avec une compressibilité d'au moins 10 % en volume, le milieu à ressort (FM) étant inclus directement dans le/chaque cylindre à ressort (10) et éventuellement dans un réservoir accumulateur (36) relié au cylindre à ressort (10).

12. Dispositif de suspension selon l'une des revendications 1 à 10,
**caractérisé en ce que** le milieu à ressort (FM) est inclus sous forme d'un gaz dans un accumulateur à ressort (40) hydropneumatique, le/chaque cylindre à ressort (10) agissant indirectement par un fluide hydraulique (HM) contre le milieu à ressort (FM).

13. Dispositif de suspension selon la revendication 12,
**caractérisé en ce qu'**au moins une vanne d'amortissement (52) est disposée dans le circuit du milieu hydraulique (HM).

14. Dispositif de suspension selon la revendication 1 à 13,
**caractérisé en ce que** le dispositif d'amortissement (50) présente deux cylindres amortisseurs (70) avec des espaces de cylindre (76) respectivement variables en volume dans le sens contraire dans la même proportion, le milieu d'amortissement (DM) circulant en faisant respectivement un aller retour lors des mouvements de suspension entre les deux espaces de cylindre (76) et par l'intermédiaire d'une vanne d'amortissement (52).

15. Dispositif de suspension selon l'une des revendications 1 à 14,
**caractérisé en ce que** le dispositif d'amortissement (50) présente un réservoir (118) intégré dans le circuit d'amortissement.

16. Dispositif de suspension selon l'une des revendications 2 à 15,
**caractérisé en ce que** l'engrenage (22) est disposé dans un espace de boîtier (78), dans lequel l'espace de boîtier (78) est intégré dans le circuit d'amortissement et est rempli à cet effet au moins partiellement avec le milieu d'amortissement (DM).

17. Dispositif de suspension selon l'une des revendications 1 à 16,
**caractérisé par** au moins un accumulateur à ressort (40) hydropneumatique avec un piston séparateur (44) librement mobile, qui sépare un espace accumulateur (46) relié hydrauliquement au cylindre à ressort (10) et contenant un milieu hydraulique (HM) d'une chambre à ressort (48) contenant le milieu à ressort (FM) gazeux.

18. Dispositif de suspension selon la revendication 17,
**caractérisé en ce que** le piston séparateur (44) peut être alimenté avec une contre-pression sur son côté partant de la chambre à ressort (48) indépendamment de la pression du milieu hydraulique (HM).

19. Dispositif de suspension selon la revendication 18,
**caractérisé en ce que** le piston séparateur (44) présente une tige de piston (94) s'étendant axialement à travers l'espace accumulateur (46) et de façon étanche à travers une paroi intermédiaire (96) dans un espace de pression (98), dans lequel la tige de piston (94) peut être alimentée dans l'espace de pression (98) avec la contre-pression en particulier pneumatique.

20. Dispositif de suspension selon l'une des revendications 1 à 19,
**caractérisé par** un amortissement hydraulique de position extrême, en particulier avec au moins un dispositif d'étranglement (104) hydraulique, intégré dans le cylindre à ressort (10) et/ou dans le cylindre amortisseur (70), dépendant de la course, de telle sorte qu'un ralentissement des mouvements de suspension est garanti respectivement vers la fin de la course de déplacement avant d'atteindre une butée d'extrémité mécanique.

21. Dispositif de suspension selon l'une des revendications 1 à 20,
**caractérisé en ce que** le dispositif d'amortissement (50) présente un dispositif supplémentaire (124) de telle sorte que de très légers mouvements de suspension ne sont pratiquement pas amortis des deux côtés d'une position statique, alors qu'un amortissement ne démarre automatiquement qu'à partir d'une course de ressort définie.

22. Dispositif de suspension selon l'une des revendications 1 à 21,
**caractérisé en ce que** le dispositif d'amortissement (50) entraîne un amortissement dans le sens de détente et éventuellement également dans le sens de compression.

23. Dispositif de suspension selon la revendication 22,
**caractérisé en ce que** le cylindre d'amortissement (70a) est conçu sous forme d'unité piston-cylindre à double effet avec un premier espace de pression (76a) et un second espace de pression (76b), les espaces de pression (76a, 76b) étant reliés à respectivement une vanne d'amortissement (52a, 52b) séparée.

24. Dispositif de suspension selon l'une des revendications 1 à 23,
**caractérisé par** un dispositif de mise à niveau (150) hydraulique, de telle sorte qu'un niveau de véhicule statique est modifié par l'arrivée ou l'évacuation de milieu hydraulique (HM) dans le circuit ou à la sortie du circuit à ressort.

25. Dispositif de suspension selon l'une des revendications 1 à 24,
**caractérisé par** un dispositif (158) destiné à modifier la caractéristique d'amortissement, dans lequel au moins une vanne d'amortissement réglable (52 ; 52a, b) peut être alimentée pendant une courte durée par l'intermédiaire d'une soupape de commutation (160) avec une pression de commande - en particulier dépendante de la charge.
